# EUROPEAN PATENT APPLICATION

(11) **EP 4 633 256 A1**
(43) Date of publication of application: **15.10.2025**
(21) Application number: 24738723.6
(22) Date of filing: 04.01.2024
(51) Int. Cl.: H04W 56/00, H04W 28/02, H04L 43/0829, H04L 43/0852, H04J 3/06

(54) **METHOD FOR SUPPORTING COMMUNICATION SERVICE IN WIRELESS COMMUNICATION SYSTEM**

(30) Priority: 05.01.2023 KR 20230001876
(71) Applicant: Samsung Electronics Co., Ltd., Suwon-si, Gyeonggi-do 16677 (KR)
(72) Inventor: MOON, Sangjun, Suwon-si Gyeonggi-do 16677 (KR)
(74) Representative: Gulde & Partner
(86) International application number: PCT/KR2024/000166
(87) International publication number: WO 2024/147654

(57) **Abstract**

The present disclosure relates to a 5G or 6G communication system for supporting higher data transmission rates. A method performed by an NEF entity in a wireless communication system comprises the steps of: receiving a session update request message including at least one quality of service (QoS) parameter from an application function (AF) entity; determining whether a session has been established between the NEF entity and a time sensitive communication time synchronization function (TSCTSF) entity; and if a session has been established between the NEF entity and the TSCTSF entity, transmitting a QoS update request message including the at least QoS parameter to the TSCTSF entity.

## Description

### [Technical Field]

The disclosure relates to a method for supporting a communication service through a wireless communication network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure relates to a method for providing time synchronization between wireless user equipments (UEs) through a wireless communication network, more specifically, a 3GPP 5GS (5th generation (5G) system). There is a need for a method to transition between, and select, a Quality of Service (QoS) configuration for time synchronization and a conventional QoS configuration. A signal transmission path is required to be changed depending on the QoS configuration method.

In addition, the disclosure relates to utilizing the QoS configuration method for providing time synchronization between wireless UEs using the 5GS for other services such as interactive services and eXtended Relationship Management (XRM) services.

### [Technical Solution]

According to an embodiment of the disclosure, a method performed by a network exposure function (NEF) entity in a wireless communication system includes receiving a session update request message including at least one quality of service (QoS) parameter from an application function (AF) entity, determining whether a session is established between the NEF entity and a time sensitive communication time synchronization function (TSCTSF) entity, and if a session is established between the NEF entity and the TSCTSF entity, transmitting a QoS update request message including the at least QoS parameter to the TSCTSF entity.

According to an embodiment of the disclosure, in a wireless communication system, a network exposure function (NEF) entity includes a transceiver and at least one processor, wherein the at least one processor is configured to receive a session update request message including at least one quality of service (QoS) parameter from an application function (AF) entity, determine whether a session is established between the NEF entity and a time sensitive communication time synchronization function (TSCTSF) entity, and if a session is established between the NEF entity and the TSCTSF entity, transmit a QoS update request message including the at least QoS parameter to the TSCTSF entity.

### [Advantageous Effects]

When providing time synchronization between wireless UEs through a 3GPP 5G system (5GS), a QoS support is possible and may be configured in a scenario where Sync is changed from not-supported to supported, or conversely, when Sync is changed from supported to not-supported.

### [Brief Description of Drawings]

FIGS. 1A and 1B illustrate a method for a network to configure a QoS to a UE according to an embodiment of the disclosure.
FIGS. 2A and 2B illustrate a method for a network to configure a QoS to a UE depending on whether synchronization is supported according to an embodiment of the disclosure.
FIGS. 3A, 3B, and 3C illustrate a method and flowcharts for configuring a QoS according to an AF request in case that a network provides a time synchronization service to a UE, according to an embodiment of the disclosure.
FIGS. 4A, 4B, and 4C illustrate a method and flowcharts for configuring a QoS according to a change in subscriber information in case that a network provides a time synchronization service to a UE, according to an embodiment of the disclosure.
FIGS. 5A, 5B, and 5C illustrate a method and flowcharts for configuring a QoS according to a change in synchronization state in case that a network provides a time synchronization service to a UE, according to an embodiment of the disclosure.
FIGS. 6A and 6B illustrate a method and a flowchart for a network to configure a QoS to a UE for a Sync Service, an Interactive Service, and an XRM Service based on a request of an AF according to an embodiment of the disclosure.
FIGS. 7A, 7B, and 7C illustrate a method and flowcharts for configuring a QoS for a Sync Service, an Interactive Service, and an XRM Service according to a change in subscriber information according to an embodiment of the disclosure.
FIG. 8 illustrates a process of configuring a QoS according to an AF request in case that a network provides a time synchronization service to a UE, according to an embodiment of the disclosure.
FIG. 9 illustrates a process of configuring a QoS according to an AF request in case that a network provides a time synchronization service to a UE, according to an embodiment of the disclosure.
FIG. 10 illustrates a process of configuring a QoS according to a change in subscriber information in case that a network provides a time synchronization service to a UE according to an embodiment of the disclosure.
FIG. 11 illustrates a process of configuring a QoS according to a change in subscriber information in case that a network provides a time synchronization service to a UE according to an embodiment of the disclosure.
FIG. 12 illustrates a process of configuring a QoS according to a change in synchronization state in case that a network provides a time synchronization service to a UE according to an embodiment of the disclosure.
FIG. 13 illustrates a process of configuring a QoS according to a change in synchronization state in case that a network provides a time synchronization service to a UE according to an embodiment of the disclosure.
FIG. 14 illustrates a process in which a network configures QoS to a UE for a Sync Service, an Interactive Service, and an XRM Service based on an AF request according to an embodiment of the disclosure.
FIG. 15 illustrates a process in which a network configures QoS to a UE for a Sync Service, an Interactive Service, and an XRM Service based on an AF request according to an embodiment of the disclosure.
FIG. 16 illustrates a process of configuring a QoS for a Sync Service, an Interactive Service, and an XRM Service according to a change in subscriber information according to an embodiment of the disclosure.
FIG. 17 illustrates a process of configuring a QoS for a Sync Service, an Interactive Service, and an XRM Service according to a change in subscriber information according to an embodiment of the disclosure.
FIG. 18 illustrates a structure of a network entity according to an embodiment of the disclosure.
FIG. 19 illustrates a structure of a UE according to an embodiment of the disclosure.
FIG. 20 illustrates a structure of an AF according to an embodiment of the disclosure.

### [Mode for Carrying out the Invention]

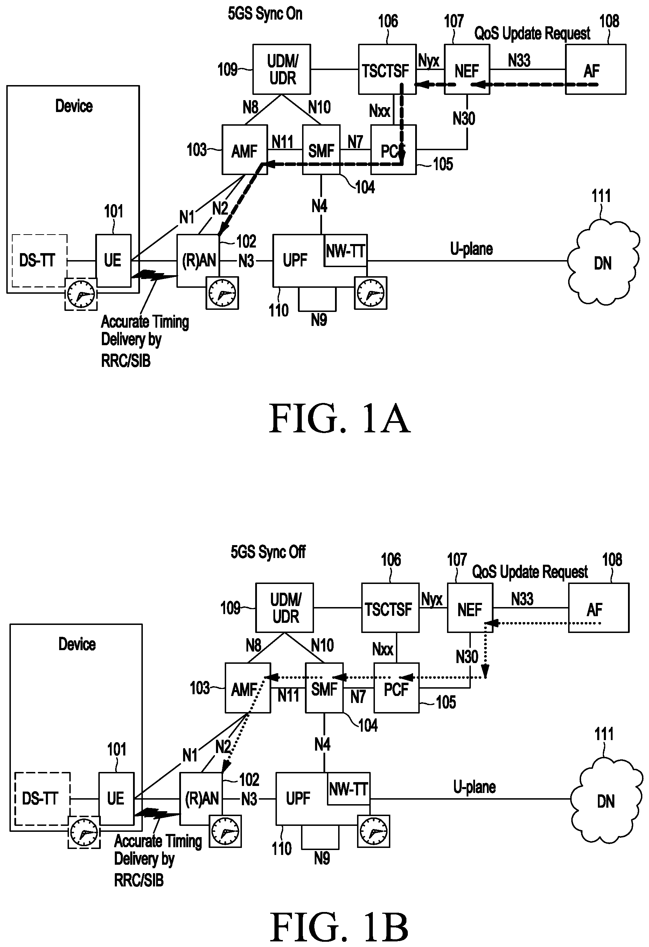

FIGS. 1A and 1B illustrate a method for configuring a QoS for a UE by a network according to an embodiment of the disclosure.

FIG. 1A illustrates a method for configuring a QoS to the UE in case that the network (e.g., 5GS) provides time synchronization, and FIG. 1B illustrates a method for configuring a QoS to the UE in case that the network does not provide time synchronization. Referring to FIG. 1A, in case that the 5GS provides a Time Sync Service to the UE, and an AF 108 requests QoS to support same, the request may be transmitted to a Time Sensitive Communication and Time Synchronization Function (TSCTSF) 106 through a Network Exposure Function (NEF) 107. The TSCTSF 106 may convert the QoS into a content necessary to support a Time Sync Service and additionally configure a periodicity, an arrival Time, and a flow direction and simultaneously transmit a QoS request and information such as a delay time, a packet loss rate, and data. Afterwards, the TSCTSF 106 may simultaneously transmit the received QoS request and the configured additional information to a Policy Control Function (PCF) 105. The PCF 105 may select a 5GS QoS item that matches the received QoS request and transmit the additional information received together with the selected QoS item to a Session Management Function (SMF) 104. The SMF 104 may transmit the received QoS item and the additional information to a RAN (or base station) 102 through an Access and Mobility management Function (AMF) 103. The Radio Access Network (RAN) 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the user equipment (UE) (or terminal) 101. In addition, the SMF 104 may transmit QoS configuration-related information to a User Plane Function (UPF) 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

Referring to FIG. 1A, in case that the 5GS does not provide the time synchronization service (Time Sync Service) to the UE, and the AF 108 requests QoS to support same, a QoS update request may be transmitted to the PCF 105 through the NEF 107. The PCF 105 may select a 5GS QoS item that matches the QoS request and transmit the information to the SMF 104. The SMF 104 may transmit the QoS information to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. The SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

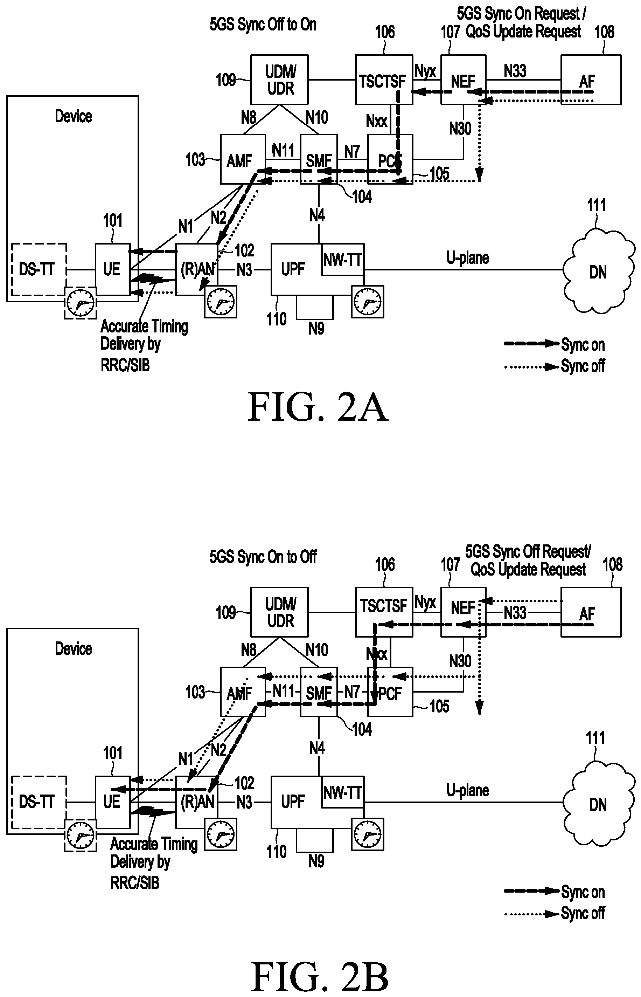

FIGS. 2A and 2B illustrate a method for a network to configure a QoS to a UE depending on whether synchronization is supported according to an embodiment of the disclosure.

The case of FIG. 2A may show a method for configuring a QoS in case that the network does not support the time synchronization and then supports the time synchronization, and the case of FIG. 2b may show a method for configuring a QoS in case that the network supports the time synchronization and then does not support the time synchronization.

The AF, the NEF, the TSCTSF, the PCF, the SMF, the AMF, the RAN, the UE, and the UPF of FIGS. 2A and 2B may be identical to the AF, the NEF, the TSCTSF, the PCF, the SMF, the AMF, the RAN, the UE, and the UPF of FIGS. 1A and 1B, respectively.

Referring to FIG. 2A, in case that a 5GC is capable of providing a synchronization service to the UE and starts/restarts the synchronization service, the AF 108 may transmit a 5GS Synchronization start/restart request (5GS Sync On request) to the TSCTSF 106 through the NEF 107. In this case, a QoS update request for a QoS configuration to provide 5GS Synchronization may also be simultaneously transmitted from the AF 108 to the TSCTSF 106 through the NEF 107. The TSCTSF 106 may convert the received request into content required for the synchronization service and may additionally configure the Periodicity, the Arrival Time, the flow direction, and the like and configure the delay time, the packet loss rate, the data rate, and the like. Afterwards, the TSCTSF 106 may simultaneously transmit the QoS request and the configured additional information to the PCF 105. The PCF 105 may select a 5GS QoS item that matches the received QoS request and transmit the 5GS QoS item and the information received together to the SMF 104. The SMF 104 may transmit the received QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. Before 5GS Synchronization is started/restarted, the QoS update request may be transmitted from the AF 108 to the PCF 105 through the NEF 107 according to a general QoS configuration method when 5GS Synchronization is not provided, and transmitted to the SMF 104 through the PCF 105, again transmitted from the SMF 104 to the RAN 102 and the UE 101 through the AMF 103, and transmitted from the SMF 104 to the UPF 110. However, in case that the AF 108 belongs to a service provider, this operation may be performed without the NEF 107, and in this case, it may be considered as the NEF 107 is combined with the AF 108.

Referring to FIG. 2B, in case that the 5GC provides the synchronization service to the UE and then stops the synchronization service, a 5GC Synchronization stop request (5GS Sync Off request) of the AF 108 may be transmitted to the TSCTSF 106 through the NEF 107. Here, since the QoS configuration to provide 5GS Synchronization is stopped, a QoS update request for a general QoS configuration may also be transmitted simultaneously. When requested by the AF 108, the QoS update request is transmitted to the PCF 105 through the NEF 107. The PCF 105 may select a 5GS QoS item that matches the received QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 103 may transmit QoS configuration-related information to the UPF 110 so as to perform a configuration required when the UPF 110 transmits User Traffic. Before 5GS Synchronization is stopped, the QoS configuration request may be transmitted from the AF 108 to the TSCTSF 106 through the NEF 107 according to a general QoS configuration method when 5GS Synchronization is provided, and the QoS configuration request may be transmitted by the TSCTSF 106 to the PCF 105 again, transmitted to the SMF 104 through the PCF 105, and again transmitted from SMF 104 to the RAN 102 and the UE 101 through the AMF 103, and transmitted from the SMF 104 to the UPF 110. However, in case that the AF 108 belongs to a service provider, this operation may be performed without the NEF 107, and in this case, it may be considered as the NEF 107 is combined with the AF 108.

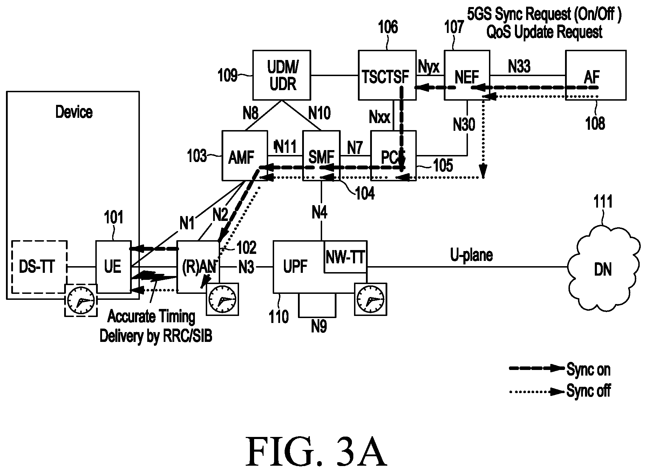

However, in FIGS. 2A and 2B, the method for configuring each QoS is clear when the time synchronization is performed and when it is not performed, but the operation for configuring a QoS is not clear for the case in which the time synchronization is provided and then not provided, or when the time synchronization is not provided and then provided. Therefore, a method for changing the method to provide QoS was required. Accordingly, a method for configuring a QoS for the case in which the time synchronization is provided and then not provided, or when the time synchronization is not provided and then provided will be proposed through FIG. 3A and below.

FIGS. 3A to 3C illustrate a method and flowcharts for configuring a QoS according to an AF request in case that a network provides a time synchronization service to a UE, according to an embodiment of the disclosure.

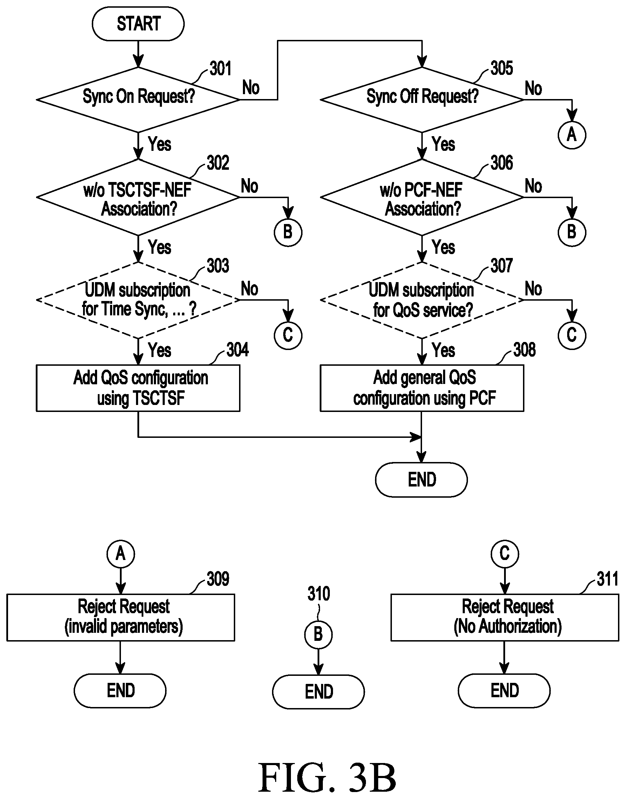

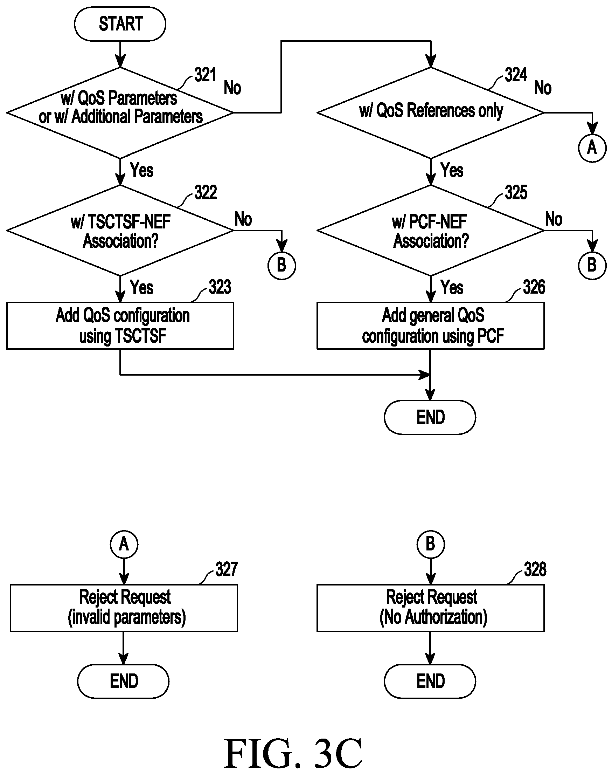

FIG. 3A shows a method for changing a QoS configuration according to a request of the AF in case that the network starts or stops the time synchronization, FIG. 3B shows a flowchart of providing a QoS configuration according to a synchronization request of the AF, and FIG. 3C shows a flowchart of providing a QoS configuration according to whether a parameter is included a QoS update request.

The AF, the NEF, the TSCTSF, the PCF, the SMF, the AMF, the RAN, the UE, and the UPF of FIGS. 3A to 3C may be identical to the AF, the NEF, the TSCTSF, the PCF, the SMF, the AMF, the RAN, the UE, and the UPF of FIGS. 1A and 1B and FIGS. 2A and 2B, respectively.

Referring to FIG. 3A, in case that the 5GC is capable of providing the synchronization service to the UE and starts or stops the synchronization service (Sync Service), the AF 108 may transmit a 5GS Synchronization start/stop request (5GS Sync Request(On/Off)) to the PCF 105 through the NEF 107.

In an embodiment, in case that the NEF 107 receives a 5GS Sync On request from the AF 108, it may be determined whether there is a configuration between the NEF 107 and TSCTSF 106. In case that there is a configuration between NEF 107 and TSCTSF 106 already, the NEF 107 may perform a QoS update using the configured TSCTSF 106. In case that there is no configuration between the NEF 107 and the TSCTSF 106, the NEF 107 may select a TSCTSF 106 to establish an association among multiple TSCTSFs 106 and configure the association. The corresponding TSCTSF 106 may add binding with the PCF 105. In case that the TSCTSF 106 is selected, a configuration may be added and a QoS update may be performed using the corresponding TSCTSF 106.

In an embodiment, in case that the NEF 107 receives a 5GS Sync Off request from the AF 108, it may be determined whether there is a configuration between the NEF 107 and the PCF 105. In case that there is a configuration between the NEF 107 and the PCF 105 already, the NEF 107 may perform a QoS update using the configured PCF 105. In case that there is no configuration between the NEF 107 and the PCF 105, the NEF 107 may select a PCF 105 to establish an association among multiple PCFs 105 and configure the association. In case that the PCF 105 is selected, a configuration may be added and a QoS update may be performed using the corresponding PCF 105.

When starting the Sync Service, a QoS configuration to provide the 5GS Synchronization may be performed simultaneously, and a QoS update request for the QoS configuration may also be transmitted to the TSCTSF 106 through the NEF 107. The TSCTSF 106 may convert a content required for the Time Sync Service and configure additional information such as a Periodicity, an Arrival Time, and a flow direction, and may transmit a QoS request such as a delay time, a packet loss rate, and a data rate together. Afterwards, the TSCTSF 106 may simultaneously transmit the QoS request and the additional information to the PCF 105. The PCF 105 may select a 5GS QoS item that matches the received QoS request and transmit the 5GS QoS item and the information received together to the SMF 104. The SMF 104 may transmit the QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic.

In another embodiment, when stopping the Sync Service, the QoS configuration to provide 5GS Synchronization is stopped, and thus, a general QoS configuration may be performed simultaneously, and in this case, the AF 108 may transmit the QoS update request for the QoS configuration to the PCF 105 through the NEF 107. The PCF 105 may select a 5GS QoS item that matches the QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

In another embodiment, the NEF 107 may receive the QoS update request from the AF 108. Here, the NEF 107 may determine whether the QoS update request includes a QoS reference or includes a QoS parameter. In case that the QoS update request is received together with the 5G Sync On message from the AF 108, the NEF 107 may determine whether there is a QoS parameter or an additional parameter. In case that a QoS parameter or an additional parameter is included, the NEF 107 may determine whether there is a configuration with the TSCTSF 106. In case that the QoS update request is received together with the 5G Sync On message from the AF 108 and the QoS parameter or the additional parameter is not included, the NEF 107 may determine whether there is a configuration with the PCF 105.

Referring to FIG. 3B, the NEF may perform a QoS configuration operation after receiving the 5GS Sync start/stop request. The NEF may determine whether the request received from AF is the Sync On request (operation 301). In case that the 5GS Sync start request is received from the AF, the NEF may identify whether there is a TSCTSF-NEF Association (or configuration) (operation 302). In case that there is a TSCTSF-NEF Association, the subsequent QoS configuration operation may be performed by transmitting the QoS update request to the TSCTSF of which the configuration exists (operation 309). In case that there is no TSCTSF-NEF Association, the NEF may first establish an association (or configuration) with the TSCTSF. In order to configure a TSCTSF-NEF Association, the NEF or the TSCTSF selectively may identify whether there are Unified Data Management (UDM) and Subscription information (operation 303). In case that there is Subscription information in the UDM, a QoS update configuration through the corresponding TSCTSF may be added (operation 304). In case that there is no Subscription information in the UDM, a rejection message may be transmitted to the AF (operation 311). In case that the received request is not a Sync On request, the NEF may determine whether the 5GS Sync stop request has been received from the AF (operation 305). In case that the 5GS Sync Off request is not received, a rejection message may be transmitted to the AF (operation 309). In case that the 5GS Sync stop request is received, the NEF may identify whether there is a PCF-NEF Association (or configuration) (operation 306). In case that there is a PCF-NEF Association, the subsequent QoS configuration operation may be performed by transmitting the QoS update request to the configured PCF (operation 309). In case that there is no PCF-NEF Association, the NEF may first establish an association with the PCF. In order to configure a PCF-NEF Association, the NEF or the PCF selectively may identify whether there are the UDM and Subscription information (operation 307). In case that there is Subscription information in the UDM, a QoS update configuration through the corresponding PCF may be added (operation 308). In case that there is no Subscription information in the UDM, a rejection message may be transmitted to the AF (operation 311). However, in case that the AF belongs to a service provider, this operation may be performed without the NEF and in this case, it may be considered as the same operation as the NEF combined with the AF.

Referring to FIG. 3C, the NEF may receive a QoS update request from the AF. The NEF may determine whether a QoS parameter is included in the QoS update request or whether an additional parameter is included (operation 321). The QoS parameter may include a Requested 5GS Delay (optional), a Requested Priority (optional), a Requested Guaranteed Bitrate, and a Requested Maximum Bitrate. The Additional parameter may include flow direction, Burst Size, Burst Arrival Time at UE (uplink) or UPF (downlink), Periodicity, Time domain, and Survival Time. In case that the QoS parameter or the Additional parameter is included, the NEF may determine whether NEF-TSCTSF Association with the TSCTSF has been configured (step 322). In case that the NEF-TSCTSF Association has been established, the NEF may perform a subsequent QoS configuration procedure through the TSCTSF (operation 323). In case that NEF-TSCTSF Association has not been established, the NEF may transmit a rejection message to the AF (operation 328). In case that the QoS parameter or Additional parameter is not included, the NEF may determine whether QoS Reference information is included in the QoS update request (operation 324). The QoS Reference information may be based on target terminal information, Traffic Descriptors such as the IP/Ethernet address and port number of the UE/server, protocol, and standardized QoS values. In case that the QoS Reference information is not included in the QoS update request, a rejection message may be transmitted to the AF (operation 327). In case that the QoS Reference information is included in the QoS update request, it may be determined whether a PCF-NEF Association (or configuration) has been configured (operation 325). In case that there is no PCF-NEF configuration, the NEF may transmit a rejection message to the AF (operation 328). In case that there is a PCF-NEF configuration, a subsequent QoS configuration procedure may be performed through the corresponding PCF-NEF (operation 326).

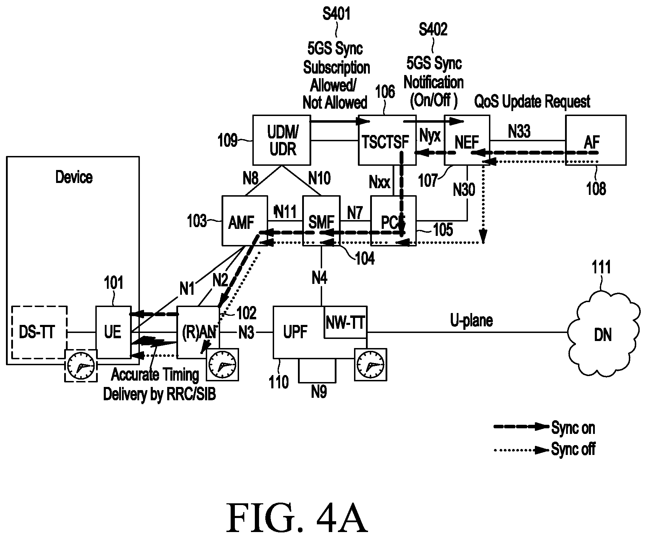

FIGS. 4A to 4C illustrate a method and flowcharts for configuring a QoS according to a change in subscriber information in case that a network provides a time synchronization service to a UE, according to an embodiment of the disclosure.

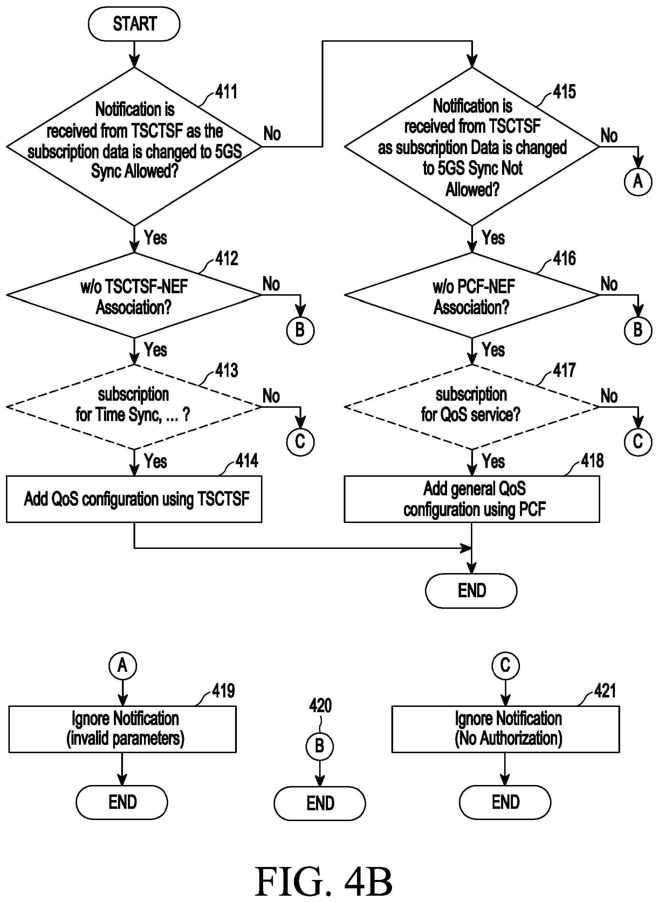

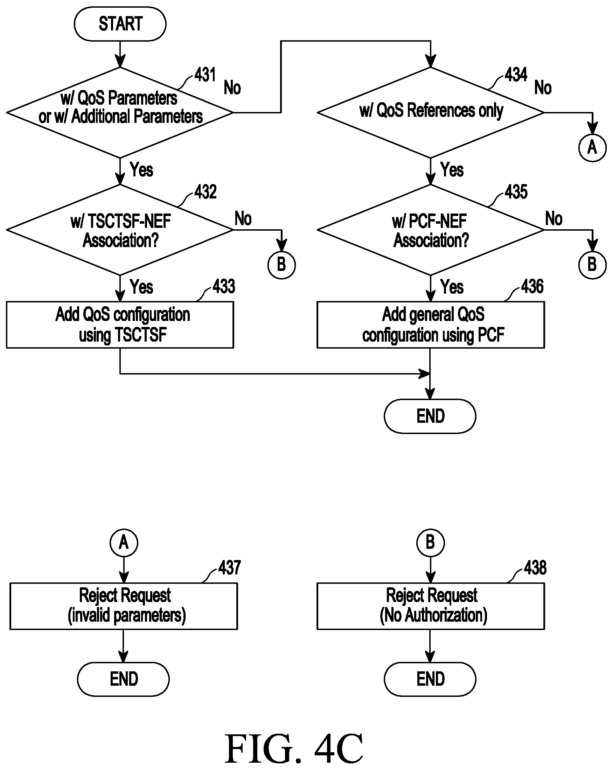

FIG. 4A shows a method for changing a QoS configuration according to a change in subscriber information in case that the network starts or stops the time synchronization, FIG. 4B shows a flowchart of providing a QoS configuration according to a change in subscriber information, and FIG. 4C shows a flowchart of providing a QoS configuration according to whether a parameter is included a QoS update request.

The AF, the NEF, the TSCTSF, the PCF, the SMF, the AMF, the RAN, the UE, and the UPF of FIGS. 4A to 4C may be identical to the AF, the NEF, the TSCTSF, the PCF, the SMF, the AMF, the RAN, the UE, and the UPF of FIGS. 1A to 3C, respectively.

FIG. 4A shows a case in which a Sync Service is started or stopped according to a change in subscriber information when the 5GC is capable of providing a Synchronization Service to the UE. A UDM/User Data Repository (UDR) 109 may transmit to the TSCTSF 107 whether it is allowed or not allowed when subscriber information is changed (operation S401). Accordingly, the TSCTSF 107 may transmit the 5GS Synchronization service start/stop back to the NEF 107 (operation S402).

When starting the Sync Service, a QoS configuration to provide the 5GS Synchronization may be performed simultaneously, and a QoS update request for the QoS configuration may be transmitted to the TSCTSF 106 through the NEF 107. The TSCTSF 106 may convert a content required for the Time Sync Service and configure additional information such as a Periodicity, an Arrival Time, and a flow direction, and may transmit a QoS request such as a delay time, a packet loss rate, and a data rate together. Afterwards, the TSCTSF 106 may simultaneously transmit the QoS request and the additional information to the PCF 105. The PCF 105 may select a 5GS QoS item that matches the received QoS request and transmit the 5GS QoS item and the information received together to the SMF 104. The SMF 104 may transmit the QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic.

In another embodiment, when stopping the Sync Service, the QoS configuration to provide 5GS Synchronization is stopped, and thus, a general QoS configuration may be performed simultaneously, and in this case, the AF 108 may transmit the QoS update request for the QoS configuration to the PCF 105 through the NEF 107. The PCF 105 may select a 5GS QoS item that matches the QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

FIG. 4B shows a flowchart for a case in which a Sync Service is started or stopped according to a change in subscriber information when the 5GC is capable of providing a Synchronization Service to the UE. The UDM/UDR may transmit to the TSCTSF information indicating whether synchronization is allowed or not allowed when subscriber information has been changed. Accordingly, the TSCTSF may notify the NEF again of the 5GS Synchronization service start/stop. Here, after receiving the 5GS Synchronization start/stop notification, the NEF may perform a QoS configuration operation appropriate for the situation. The NEF may determine whether the subscriber information has been changed to 5GC synchronization allowed and a 5GC synchronization start notification has been received from the TSCTSF (operation 411). In case that the 5GS synchronization start notification is received from the TSCTSF, the NEF may identify whether there is a TSCTSF-NEF Association (or configuration) (operation 412). In case that there is a TSCTSF-NEF Association, the subsequent QoS configuration operation may be performed by transmitting the QoS update request to the corresponding TSCTSF (operation 420). In case that there is no TSCTSF-NEF Association, the NEF may first establish an association with the TSCTSF. In order to configure a TSCTSF-NEF Association, the NEF or the TSCTSF selectively may identify whether there are the UDM and Subscription information (operation 413). In case that there is Subscription information in the UDM, a QoS update configuration through the corresponding TSCTSF may be added (operation 414). In case that there is no Subscription information in the UDM, the NEF may transmit an ignore notification to the AF (operation 421). In case that the 5GS Synchronization start notification is not received from the TSCTSF, the NEF may determine whether the subscriber information has changed to 5GC synchronization allowed and a 5GS Synchronization stop notification has been received from the TSCTSF (operation 415). In case that the 5GS Sync stop notification is not received from the TSCTSF, an ignore notification may be transmitted to the AF (operation 419). In case that the 5GS Sync stop notification is received from the TSCTSF, the NEF may determine whether there is a PCF-NEF Association (operation 416). In case that there is a PCF-NEF Association, the subsequent QoS configuration operation may be performed by transmitting the QoS update request to the PCF (operation 420). In case that there is no PCF-NEF Association, the NEF may first establish an association with the PCF. In order to configure a PCF-NEF Association, the NEF or the PCF may identify whether there are the UDM and Subscription information (operation 417). In case that there is Subscription information in the UDM, a QoS update configuration through the corresponding PCF may be added (operation 418). In case that there is no Subscription information in the UDM, the NEF may transmit an ignore notification to the AF (operation 421). However, in case that the AF belongs to a service provider, this operation may be performed without the NEF and in this case, it may be considered as the same operation as the NEF combined with the AF.

Referring to FIG. 4C, the NEF may receive a QoS update request from the AF. The NEF may determine whether a QoS parameter is included in the QoS update request or whether an additional parameter is included (operation 431). The QoS parameter may include a Requested 5GS Delay (optional), a Requested Priority (optional), a Requested Guaranteed Bitrate, and a Requested Maximum Bitrate. The Additional parameter may include flow direction, Burst Size, Burst Arrival Time at UE (uplink) or UPF (downlink), Periodicity, Time domain, and Survival Time. In case that the QoS parameter or the Additional parameter is included, the NEF may determine whether NEF-TSCTSF Association with the TSCTSF has been configured (step 432). In case that the NEF-TSCTSF Association has been established, the NEF may perform a subsequent QoS configuration procedure through the TSCTSF (operation 433). In case that NEF-TSCTSF Association has not been established, the NEF may transmit a rejection message to the AF (operation 438). In case that the QoS parameter or Additional parameter is not included, the NEF may determine whether QoS Reference information is included in the QoS update request (operation 434). The QoS Reference information may be based on target terminal information, Traffic Descriptors such as the IP/Ethernet address and port number of the UE/server, protocol, and standardized QoS values. In case that the QoS Reference information is not included in the QoS update request, a rejection message may be transmitted to the AF (operation 437). In case that the QoS Reference information is included in the QoS update request, it may be determined whether a PCF-NEF Association (or configuration) has been configured (operation 435). In case that there is no PCF-NEF configuration, the NEF may transmit a rejection message to the AF (operation 438). In case that there is a PCF-NEF configuration, a subsequent QoS configuration procedure may be performed through the corresponding PCF-NEF (operation 436).

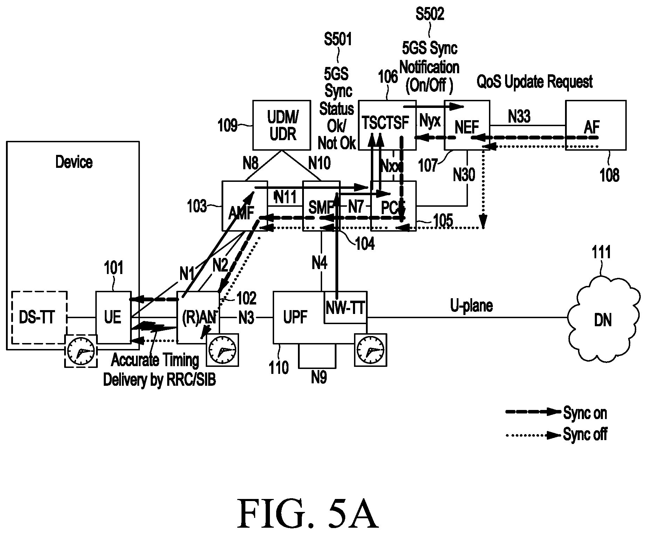

FIGS. 5A to 5C illustrate a method and flowcharts for configuring a QoS according to a change in synchronization state in case that a network provides a time synchronization service to a UE, according to an embodiment of the disclosure.

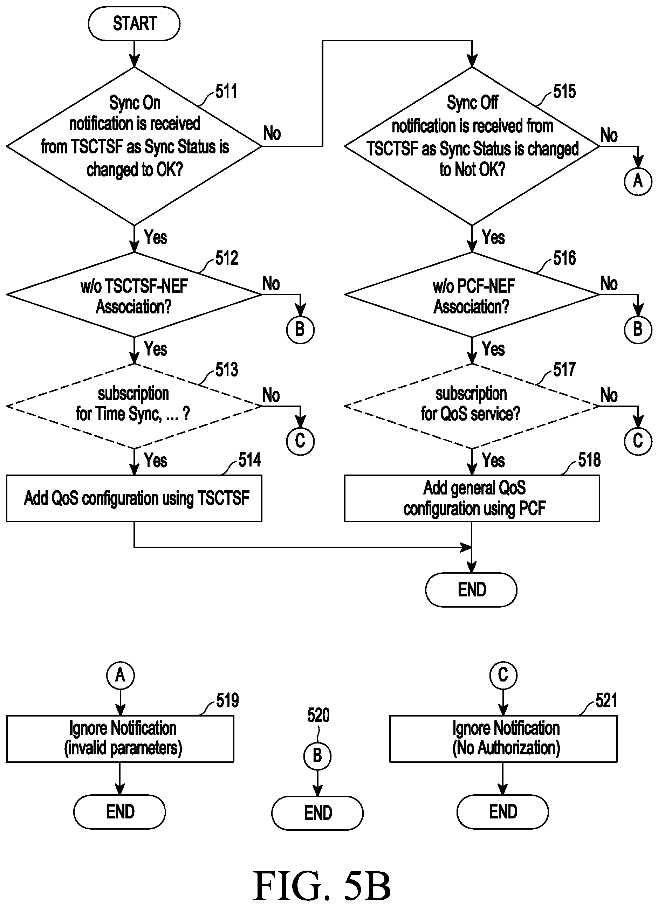

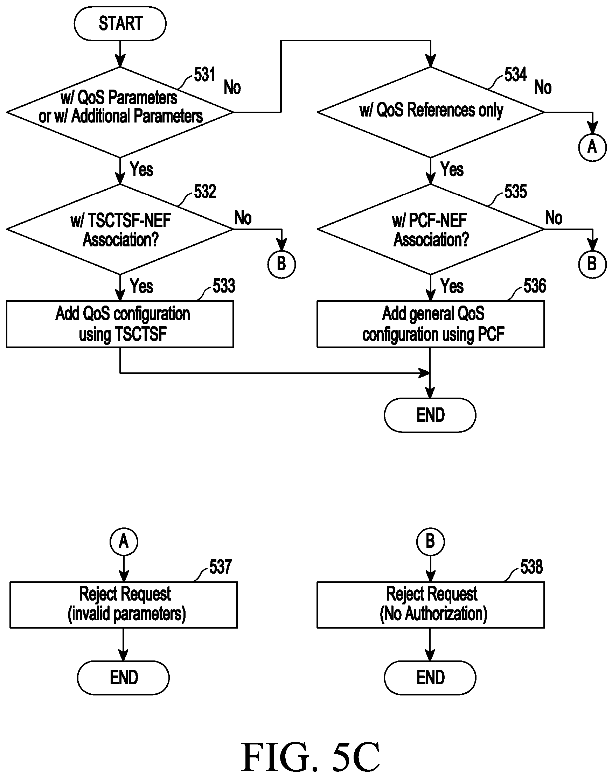

FIG. 5A shows a method for changing a QoS configuration according to a change in synchronization state in case that the network starts or stops the time synchronization, FIG. 5B shows a flowchart of providing a QoS configuration according to a change in synchronization state, and FIG. 5C shows a flowchart of providing a QoS configuration according to whether a parameter is included a QoS update request.

The AF, the NEF, the TSCTSF, the PCF, the SMF, the AMF, the RAN, the UE, and the UPF of FIGS. 5A to 5C may be identical to the AF, the NEF, the TSCTSF, the PCF, the SMF, the AMF, the RAN, the UE, and the UPF of FIGS. 1A to 4C, respectively.

FIG. 5A shows a case in which a Sync Service is started or stopped based on a 5GS synchronization state (Sync Status) when the 5GC is capable of providing a Synchronization Service to the UE. Whether the synchronization state is possible (Ok) or impossible (not Ok) may be notified to the TSCTSF 106 from the RAN 102, the UPF 110, or an OAM (not shown) (operation S501). The TSCTSF 106 having received the synchronization state may again notify the NEF 107 of the 5GS Synchronization service start/stop again according to the synchronization state (operation S502).

When starting the Sync Service, a QoS configuration to provide the 5GS Synchronization may be performed simultaneously, and a QoS update request for the QoS configuration may be transmitted to the TSCTSF 106 through the NEF 107. The TSCTSF 106 may convert a content required for the Time Sync Service and configure additional information such as a Periodicity, an Arrival Time, and a flow direction, and may transmit a QoS request such as a delay time, a packet loss rate, and a data rate together. Afterwards, the TSCTSF 106 may simultaneously transmit the QoS request and the additional information to the PCF 105. The PCF 105 may select a 5GS QoS item that matches the received QoS request and transmit the 5GS QoS item and the information received together to the SMF 104. The SMF 104 may transmit the QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic.

In another embodiment, when stopping the Sync Service, the QoS configuration to provide 5GS Synchronization is stopped, and thus, a general QoS configuration may be performed simultaneously, and in this case, the AF 108 may transmit the QoS update request for the QoS configuration to the PCF 105 through the NEF 107. The PCF 105 may select a 5GS QoS item that matches the QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

Referring to FIG. 5B, a Sync Service may be started or stopped based on a 5GS synchronization state (Sync Status) when the 5GC is capable of providing a Synchronization Service to the UE. The synchronization state is notified to the TSCTSF from the RAN, the UPF or the OAM, and the TSCTSF may notify 5GS Synchronization start/stop again to the NEF depending on the synchronization state. Here, after receiving the 5GS Synchronization start/stop notification, the NEF may perform a QoS configuration operation. The NEF may determine whether the synchronization state has been changed to be synchronization allowed and a 5GS synchronization start notification has been received from the TSCTSF (operation 511). If it is determined that the NEF has received the 5GS synchronization start notification from the TSCTSF, the NEF may determine whether there is a TSCTSF-NEF Association (or configuration) (operation 512). In case that there is a TSCTSF-NEF Association, the subsequent QoS configuration operation may be performed by transmitting the QoS update request to the corresponding TSCTSF (operation 520). In case that there is no TSCTSF-NEF Association, the NEF may first establish an association with the TSCTSF. In order to configure a TSCTSF-NEF Association, the NEF or the TSCTSF selectively may identify whether there are the UDM and Subscription information (operation 513). In case that there is Subscription information, a QoS update configuration through the corresponding TSCTSF may be added (operation 514). In case that there is no Subscription information, the ignore notification may be transmitted to the AF (operation 521). If it is determined that the NEF has not received the 5GS synchronization start notification from the TSCTSF, it may be determined that the 5GS Synchronization stop notification has been received from the TSCTSF (operation 515). In case that the 5GS Synchronization stop notification is not received from the TSCTSF, the NEF may transmit an ignore notification to the AF (operation 519). In case that the 5GS synchronization stop notification is received from the TSCTSF, whether there is a PCF-NEF Association (or configuration) may be identified (operation 516). In case that there is a PCF-NEF Association, the subsequent QoS configuration operation may be performed by transmitting the QoS update request to the corresponding PCF (operation 520). In case that there is no PCF-NEF Association, the NEF may first establish an association with the PCF (Operation 520). In order to configure a PCF-NEF Association, the NEF or the PCF may identify whether Subscription information is present in the UDM. In case that there is Subscription information, a QoS update configuration through the corresponding PCF may be added (operation 518). In case that there is no Subscription information, the ignore notification may be transmitted to the AF (operation 521). However, in case that the AF belongs to a service provider, this operation may be performed without the NEF and in this case, it may be considered as the same as the NEF combined with the AF.

Referring to FIG. 5C, the NEF may receive a QoS update request from the AF. The NEF may determine whether a QoS parameter is included in the QoS update request or whether an additional parameter is included (operation 531). The QoS parameter may include a Requested 5GS Delay (optional), a Requested Priority (optional), a Requested Guaranteed Bitrate, and a Requested Maximum Bitrate. The Additional parameter may include flow direction, Burst Size, Burst Arrival Time at UE (uplink) or UPF (downlink), Periodicity, Time domain, and Survival Time. In case that the QoS parameter or the Additional parameter is included, the NEF may determine whether NEF-TSCTSF Association with the TSCTSF has been configured (step 532). In case that the NEF-TSCTSF Association has been established, the NEF may perform a subsequent QoS configuration procedure through the TSCTSF (operation 533). In case that NEF-TSCTSF Association has not been established, the NEF may transmit a rejection message to the AF (operation 538). In case that the QoS parameter or Additional parameter is not included, the NEF may determine whether QoS Reference information is included in the QoS update request (operation 534). The QoS Reference information may be based on target terminal information, Traffic Descriptors such as the IP/Ethernet address and port number of the UE/server, protocol, and standardized QoS values. In case that the QoS Reference information is not included in the QoS update request, a rejection message may be transmitted to the AF (operation 537). In case that the QoS Reference information is included in the QoS update request, it may be determined whether a PCF-NEF Association (or configuration) has been configured (operation 535). In case that there is no PCF-NEF configuration, the NEF may transmit a rejection message to the AF (operation 538). In case that there is a PCF-NEF configuration, a subsequent QoS configuration procedure may be performed through the corresponding PCF-NEF (operation 536).

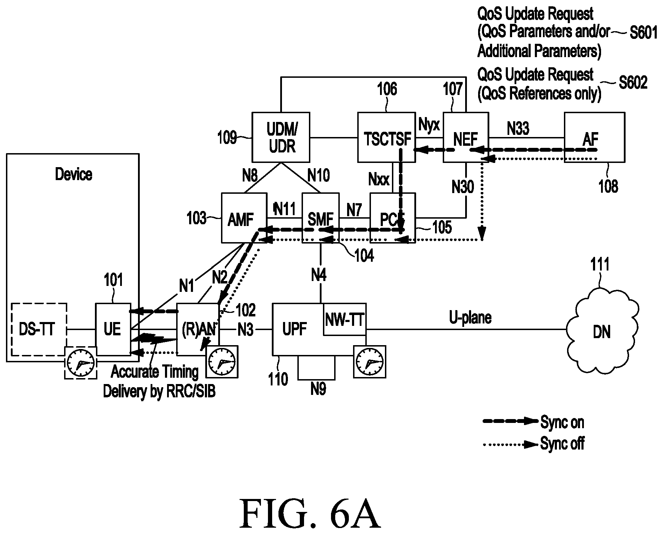

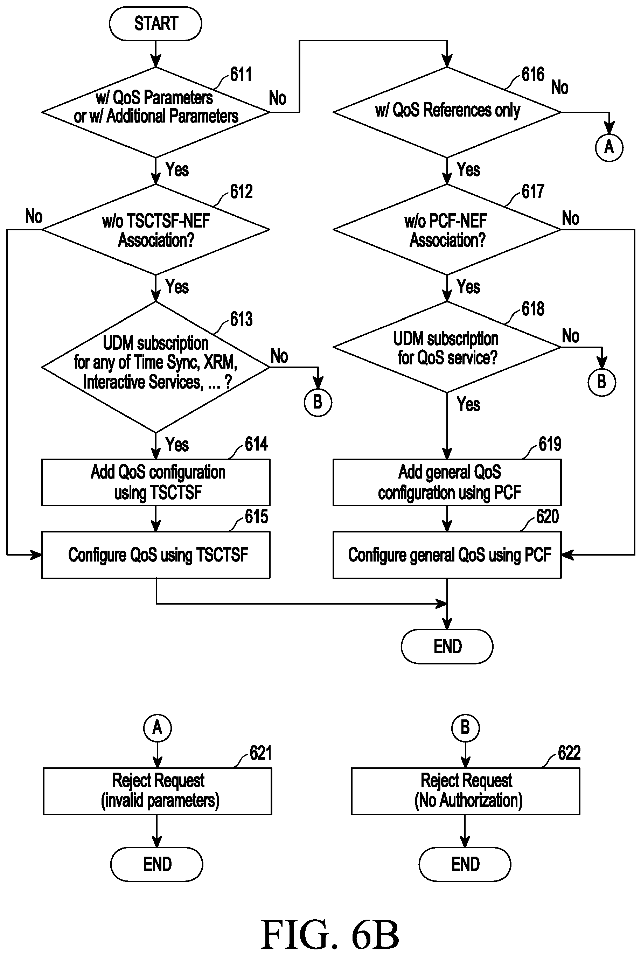

FIGS. 6A and 6B illustrate a method and a flowchart for a network to configure a QoS to a UE for a Sync Service, an Interactive Service, and an XRM Service based on a request of an AF according to an embodiment of the disclosure.

FIG. 6A shows a method in which a network changes a QoS configuration for a Sync Service, an Interactive Service, and an XRM Service according to a request of the AF, and FIG. 6B shows a flowchart in which a network provides a QoS configuration according to a request of the AF.

The AF, the NEF, the TSCTSF, the PCF, the SMF, the AMF, the RAN, the UE, and the UPF of FIGS. 6A and 6B may be identical to the AF, the NEF, the TSCTSF, the PCF, the SMF, the AMF, the RAN, the UE, and the UPF of FIGS. 1A to 5C, respectively.

Referring to FIG. 6A, in case that the 5GC is capable of providing the Sync Service, the Interactive Service, and the XRM Service, a 5GS QoS provision start/stop request for the Sync Service, the Interactive Service, and the XRM Service of the AF 108 may be transferred to the NEF 107. In case that a QoS update request includes QoS parameters, such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service, the Interactive Service, and the XRM Service (operation S601). In another embodiment, in case that the QoS update request includes only the QoS reference parameter, the NEF 107 may determine that a general QoS is requested (operation S602).

When providing the QoS for the Sync Service, the Interactive Service, and the XRM Service starts, the QoS update request for the QoS configuration may be transmitted to the TSCTSF 106 through the NEF 107. The TSCTSF 106 may convert a content required for the Sync Service, the Interactive Service, and the XRM Service and configure additional information such as a Periodicity, an Arrival Time, and a flow direction, and may transmit a QoS request such as a delay time, a packet loss rate, and a data rate together. Afterwards, the TSCTSF 106 may simultaneously transmit the QoS request and the additional information to the PCF 105. The PCF 105 may select a 5GS QoS item that matches the received QoS request and transmit the 5GS QoS item and the information received together to the SMF 104. The SMF 104 may transmit the QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. This additional information is originally defined for the 5GS sync service, but may also be used for the Interactive service or the XRM service. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic.

In another embodiment, in case that the provision of the QoS for the Sync Service, the Interactive Service, and the XRM Service is stopped, the QoS configuration for providing the 5GS synchronization is stopped, and thus the general QoS configuration may be concurrently performed. In this case, the AF 108 may transmit the QoS update request to the PCF 105 through the NEF 107. The PCF 105 may select a 5GS QoS item that matches the QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

Referring to FIG. 6B, the NEF may perform a QoS configuration operation after receiving a request to start or stop providing the QoS for the Sync Service, the Interactive Service, and the XRM Service. In case that the request to start providing the QoS for the Sync Service is received from the AF, the Interactive Service, and the XRM Service is received, the NEF may determine whether a QoS parameter is included in the QoS update request or whether an additional parameter is included (operation 611). The QoS parameter may include a Requested 5GS Delay (optional), a Requested Priority (optional), a Requested Guaranteed Bitrate, and a Requested Maximum Bitrate. The Additional parameter may include flow direction, Burst Size, Burst Arrival Time at UE (uplink) or UPF (downlink), Periodicity, Time domain, and Survival Time. In case that the QoS parameter or the Additional parameter is included, the NEF may identify whether a NEF-TSCTSF Association with the TSCTSF has been configured (step 612). In case that there is a TSCTSF-NEF Association, the subsequent QoS configuration operation may be performed by transmitting the request to the TSCTSF (operation 615). In case that there is no TSCTSF-NEF Association, the NEF may first establish an association with the TSCTSF. In order to configure a TSCTSF-NEF Association, the NEF or the TSCTSF selectively may identify whether Subscription information is present in the UDM (operation 613). In case that there is Subscription information, a QoS update configuration through the corresponding TSCTSF may be added (operation 614). In case that there is no Subscription information, a rejection notification may be transmitted to the AF (operation 622). In case that the request to stop providing the QoS for the Sync Service is received from the AF, the Interactive Service, and the XRM Service is received, the NEF may determine whether QoS Reference information is included in the QoS update request (operation 616). The QoS Reference information may be based on target terminal information, Traffic Descriptors such as the IP/Ethernet address and port number of the UE/server, protocol, and standardized QoS values. In case that the QoS Reference information is not included in the QoS update request, a rejection message may be transmitted to the AF (operation 621). In case that the QoS Reference information is included in the QoS update request, it may be determined whether a PCF-NEF Association (or configuration) has been configured (operation 617). In case that there is a PCF-NEF Association, the subsequent QoS configuration operation may be performed by transmitting the request to the corresponding PCF (operation 620). In case that there is no PCF-NEF Association, the NEF may first establish an association with the PCF. In order to configure a PCF-NEF Association, the NEF or the PCF may identify whether Subscription information is present in the UDM (operation 618). In case that there is Subscription information, a QoS update configuration through the corresponding PCF may be added (operation 619). In case that there is no Subscription information, a rejection notification may be transmitted to the AF (operation 622). However, in case that the AF belongs to a service provider, this operation may be performed without the NEF and in this case, it may be considered as the same operation as the NEF combined with the AF.

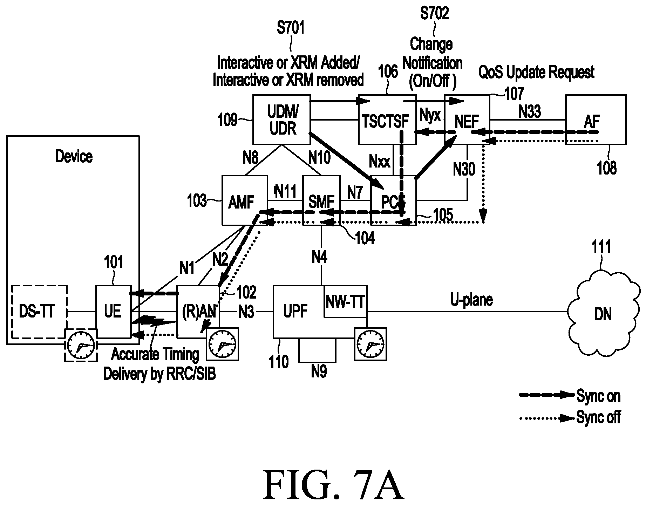

FIGS. 7A to 7C illustrate a method and flowcharts for configuring a QoS for a Sync Service, an Interactive Service, and an XRM Service according to a change in subscriber information according to an embodiment of the disclosure.

FIG. 7A shows a method for changing by a network a QoS configuration for a Sync Service, an Interactive Service, and an XRM Service according to a change in subscriber information in case that the network starts or stops the time synchronization,

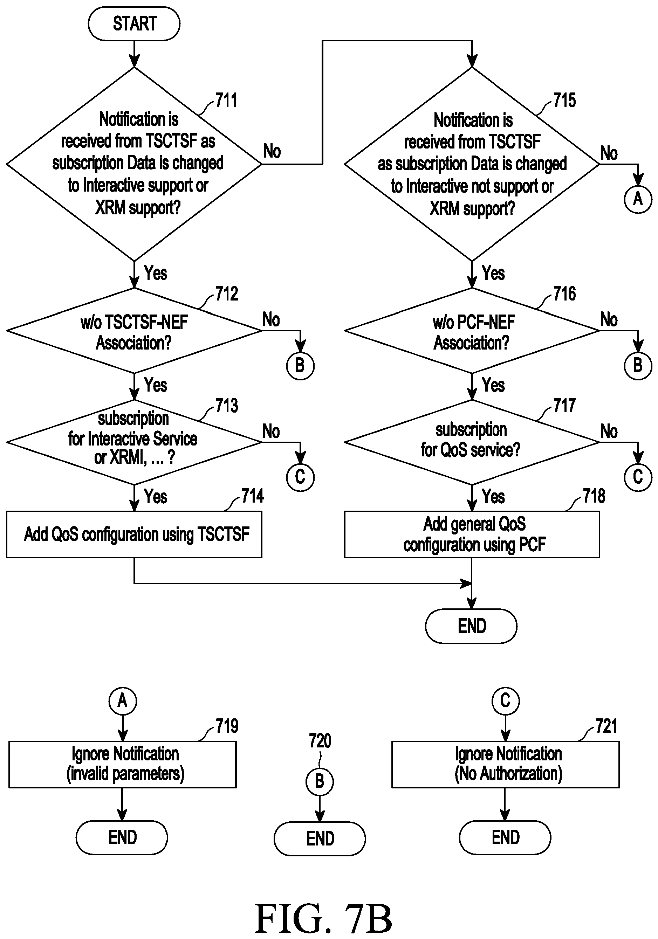

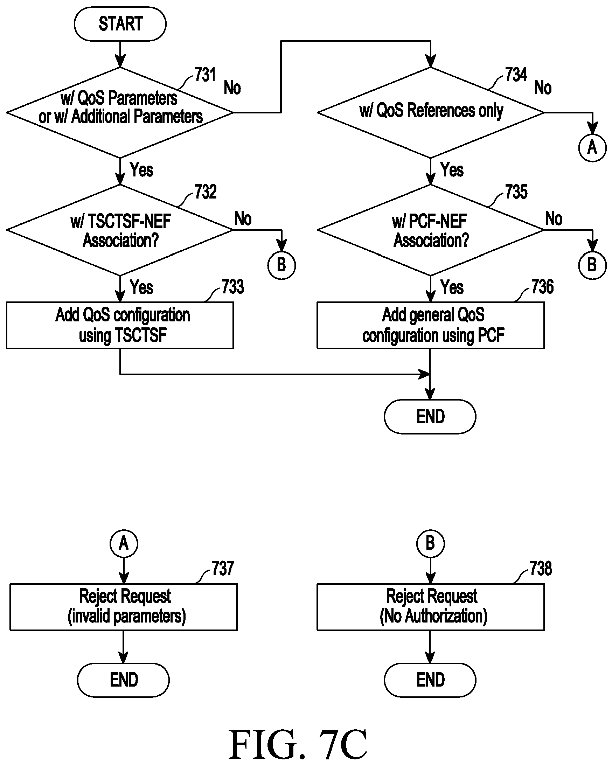

FIG. 7B shows a flowchart of providing a QoS configuration according to a change in subscriber information, and FIG. 7C shows a flowchart of providing a QoS configuration according to whether a parameter is included a QoS update request.

The AF, the NEF, the TSCTSF, the PCF, the SMF, the AMF, the RAN, the UE, the UPF, and the UDM/UDR of FIGS. 7A to 7C may be identical to the AF, the NEF, the TSCTSF, the PCF, the SMF, the AMF, the RAN, the UE, the UPF, and the UDM/UDR of FIGS. 1A to 6B, respectively.

Referring to FIG. 7A, in case that the 5GC is capable of providing the Sync Service, the Interactive Service, and the XRM Service, according to a change in subscriber information, the UDM/UDR 109 may notify the TSCTSF 106 of a changed content of subscriber information directly or through the PCF 107 or notify only the PCF 105 of the change in subscriber information (operation S701). Accordingly, the TSCTSF 106 or the PCF 105 may again notify the NEF 107 of the start/stop of providing the Sync Service, the Interactive Service, and the XRM Service again (operation S702).

In case that the Sync Service, the Interactive Service, and the XRM Service start, the QoS configuration for providing the 5 GS Sync Service, the Interactive Service, and the XRM Service may be concurrently performed, and the NEF 107 may transmit a QoS update request for the QoS configuration to the TSCTSF 106. The TSCTSF 106 may convert a content required for the Sync Service, the Interactive Service, and the XRM Service and configure additional information such as a Periodicity, an Arrival Time, and a flow direction, and may transmit a QoS request such as a delay time, a packet loss rate, and a data rate together. This additional information is originally defined for the 5GS sync service, but may also be used for the Interactive service or the XRM service. Afterwards, the TSCTSF 106 may simultaneously transmit the QoS request and the additional information to the PCF 105. The PCF 105 may select a 5GS QoS item that matches the received QoS request and transmit the 5GS QoS item and the information received together to the SMF 104. The SMF 104 may transmit the QoS item and the additional information to the RAN 102 through the AMF 103. The RAN 102 may perform resource allocation through scheduling to support the delay time, the packet loss rate, the data rate, and the like, as well as scheduling to support additional information such as the Periodicity, the Arrival Time, and the flow direction. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic.

In another embodiment, in case that the Sync Service, the Interactive Service, and the XRM Service is stopped, the QoS configuration for providing the Sync Service, the Interactive Service, and the XRM Service, and thus the general QoS configuration may be concurrently performed. In this case, the AF 108 may transmit the QoS update request to the PCF 105 through the NEF 107. The PCF 105 may select a 5GS QoS item that matches the QoS request and transmit the information to the SMF 104. The SMF 104 may transmit the received QoS item to the RAN 102 through the AMF 103. The RAN 102 may perform resource allocation through scheduling that reflects the delay time and the packet loss rate. The RAN 102 may additionally perform a QoS configuration with the UE by transmitting QoS configuration-related requirement information to the UE 101. In addition, the SMF 104 may transmit QoS configuration-related information to the UPF 110 so as to perform a configuration required when the UPF 110 transmits User Traffic. However, in case that the AF 108 belongs to a service provider, this operation may be performed without the NEF 107, and in this case, it may be considered as the NEF 107 is combined with the AF 108.

Referring to FIG. 7B, in case that the Sync Service, the Interactive Service, and the XRM Service is started or stopped according to a change in subscriber information when the 5GC provides the Sync Service, the Interactive Service, and the XRM Service Service, the UDM/UDR may notify the TSCTSF of a changed content of subscriber information directly or through the PCF or notify only the PCF of a changed content of subscriber information, and accordingly, the TSCTSF or the PCF may notify the NEF of the start/stop of providing the Sync Service, the Interactive Service, and the XRM Service by the 5GC again. Here, the NEF may perform a QoS configuration operation after receiving the start/stop notification of the Sync Service, the Interactive Service, and the XRM Service by the 5GC. The NEF may determine whether the notification for stating the Sync Service, the Interactive Service, and the XRM Service by the 5GC has been received from the PCF (operation 711). In case that the notification for stating the Sync Service, the Interactive Service, and the XRM Service by the 5GC has been received from the PCF, the NEF may identify whether there is a TSCTSF-NEF Association (operation 712). In case that there is a TSCTSF-NEF Association, the subsequent QoS configuration operation may be performed by transmitting the QoS update request for starting the Sync Service, the Interactive Service, and the XRM Service by the 5GC to the TSCTSF (operation 720). In case that there is no TSCTSF-NEF Association, the NEF may first establish an association with the TSCTSF. In order to configure a TSCTSF-NEF Association, the NEF or the TSCTSF selectively may identify whether Subscription information is present in the UDM (operation 713). In case that there is Subscription information, a QoS update configuration through the corresponding TSCTSF may be added (operation 714). In case that there is no Subscription information, the ignore notification may be transmitted to the AF (operation 721). In case that the notification for stating the Sync Service, the Interactive Service, and the XRM Service by the 5GC has not been received from the PCF, it may be identified whether a 5GS Synchronization stop notification has been received from the TSCTSF (operation 715). In case that the 5GS Sync stop notification has not been received from the TSCTSF either, the NEF may transmit an ignore notification to the AF (operation 719). In case that the 5GS Sync stop notification is received from the TSCTSF, the NEF may identify whether there is a PCF-NEF Association (operation 716). In case that there is a PCF-NEF Association, the subsequent QoS configuration operation may be performed by transmitting the QoS update request to the corresponding PCF (operation 720). In case that there is no PCF-NEF Association, the NEF may first establish an association with the PCF. In order to configure a PCF-NEF Association, the NEF or the PCF may identify whether Subscription information is present in the UDM (operation 717). In case that there is Subscription information, a QoS update configuration through the corresponding PCF may be added (operation 718). In case that there is no Subscription information, the ignore notification may be transmitted to the AF (operation 721). However, in case that the AF belongs to a service provider, this operation may be performed without the NEF and in this case, it may be considered as the same operation as the NEF combined with the AF.

Referring to FIG. 7C, the NEF may receive a QoS update request from the AF. The NEF may determine whether a QoS parameter is included in the QoS update request or whether an additional parameter is included (operation 731). The QoS parameter may include a Requested 5GS Delay (optional), a Requested Priority (optional), a Requested Guaranteed Bitrate, and a Requested Maximum Bitrate. The Additional parameter may include flow direction, Burst Size, Burst Arrival Time at UE (uplink) or UPF (downlink), Periodicity, Time domain, and Survival Time. In case that the QoS parameter or the Additional parameter is included, the NEF may determine whether NEF-TSCTSF Association with the TSCTSF has been configured (step 732). In case that the NEF-TSCTSF Association has been established, the NEF may perform a subsequent QoS configuration procedure through the TSCTSF (operation 733). In case that NEF-TSCTSF Association has not been established, the NEF may transmit a rejection message to the AF (operation 738). In case that the QoS parameter or Additional parameter is not included, the NEF may determine whether QoS Reference information is included in the QoS update request (operation 734). The QoS Reference information may be based on target terminal information, Traffic Descriptors such as the IP/Ethernet address and port number of the UE/server, protocol, and standardized QoS values. In case that the QoS Reference information is not included in the QoS update request, a rejection message may be transmitted to the AF (operation 737). In case that the QoS Reference information is included in the QoS update request, it may be determined whether a PCF-NEF Association (or configuration) has been configured (operation 735). In case that there is no PCF-NEF configuration, the NEF may transmit a rejection message to the AF (operation 738). In case that there is a PCF-NEF configuration, a subsequent QoS configuration procedure may be performed through the corresponding PCF-NEF (operation 736).

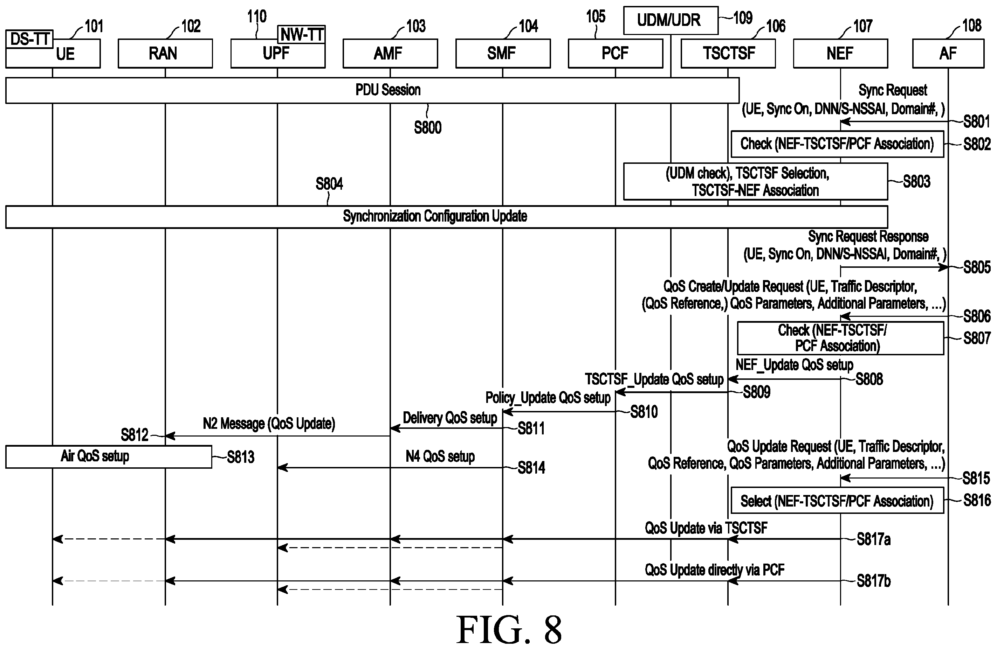

FIG. 8 illustrates a process of configuring a QoS according to an AF request in case that a network provides a time synchronization service to a UE, according to an embodiment of the disclosure.

FIS. 8 may illustrate a process in which the AF transmits a message for starting a synchronization service.

The AF, the NEF, the TSCTSF, the PCF, the SMF, the AMF, the RAN, the UE, the UPF, and the UDM/UDR of FIG. 8 may be identical to the AF, the NEF, the TSCTSF, the PCF, the SMF, the AMF, the RAN, the UE, the UPF, and the UDM/UDR of FIGS. 1A to 7C, respectively.

In operation S800, it may be assumed that the UE 101 has established a PDU Session with the network.

In operation S801, the AF 108 may send a Sync request (synchronization request) message to the NEF 107. This request may include a parameter requesting the start of the Sync Service. The Sync request may include information such as target terminal information, information indicating Sync On, DNN/S-NSSAI, and a Time Sync Domain Number.

In operation S802, the NEF 107 may determine whether there is a TSCTSF-NEF association. If the TSCTSF-NEF Association is already present, the process proceeds to operation S805. If the TSCTSF-NEF Association is not present, operation S803 is performed.

In operation S803, the NEF 107 may configure the TSCTSF-NEF Association with the TSCTSF 106. In this operation, the TSCTSF 106 or the NEF 107 may interwork with the UDM 109 to perform a process to identify whether the subscriber information includes 5GS Sync Service support. Afterwards, in operation S804, the TSCTSF 106 may configure the start for synchronization function configuration update in the RAN 102, UE 101, and UPF 110.

In operation S805, the NEF 107 may send a Sync request Response (synchronization request response) message to the AF 108.

In operation S806, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S807, in case that the NEF 107 has identified that the QoS configuration request includes a QoS Parameter or Additional Parameter, the NEF 107 may identify whether a TSCTSF-NEF Association is present. If the TSCTSF-NEF Association is present, the process proceeds to next operation S808. If the TSCTSF-NEF Association is not present, the request of the AF may be rejected.

In operation S808, the NEF 107 may send a QoS setup or configuration request for 5GS Sync support to the TSCTSF 106.

In operation S809, the TSCTSF 106 may convert a content required for the Time Sync Service and configure additional information such as a Periodicity, an Arrival Time, and a flow direction, and may transmit information such as a delay time, a packet loss rate, and a data rate together with the QoS setup or request to the PCF 105.

In operation S810, the PCF 105 may include a QoS setup or configuration request and QoS additional information in a message and transmit the message to the SMF 104.

In operation S811, the SMF 104 may transmit the received QoS setup or configuration request and QoS additional information to the AMF 103.

In operation S812, the AMF 103 transmits the QoS setup or configuration request and the QoS additional information to the RAN 102, and the RAN 102 may perform resource allocation through scheduling to support a delay time and a packet loss rate and scheduling for a Periodicity, an Arrival Time, and a flow direction concurrently.

In operation S813, the RAN 102 may additionally perform a QoS configuration with the UE by transmitting QoS configuration-related requirement information to the UE 101.

In operation S814, the SMF 104 may transmit QoS configuration-related information to the UPF 110 so as to perform a configuration required when the UPF 110 transmits User Traffic.

After the QoS setup is completed, in operation S815, the AF 108 may transmit the QoS update request (configuration) to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S816, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S817a. When it is determined that general QoS is requested, the PCF may be selected based on the PCF-NEF Association configuration to perform operation 817b.

The QoS configuration for the 5GS Sync Service may be performed in operation S817a, as in operations S808 to S814.

In operation S817b, the NEF 107 may transmit the QoS configuration request to the PCF 105. The PCF 105 may transmit the QoS configuration request to the SMF 104. The SMF 104 may transmit the QoS configuration request to the AMF 103. The AMF 103 may transmit the QoS configuration request to the RAN 102, and the RAN 102 may perform resource allocation through scheduling for supporting the delay time, the packet loss rate, the data rate, and the like. The RAN 102 may additionally perform a QoS configuration with the UE 101 by transmitting QoS configuration-related requirement information to the UE 101. The SMF 104 may transmit QoS configuration-related information to the UPF 110 so as to perform a configuration required when the UPF 110 transmits User Traffic.

However, in case that the AF 108 belongs to a service provider, this operation may be performed without the NEF 107, and in this case, it may be considered as the NEF 107 is combined with the AF 108.

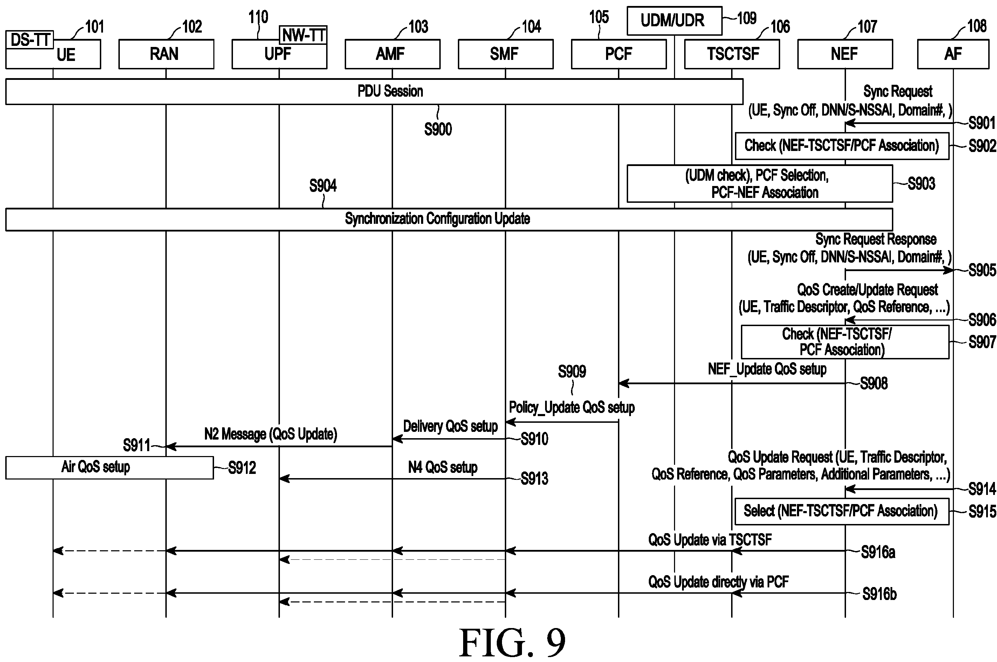

FIG. 9 illustrates a process of configuring a QoS according to an AF request in case that a network provides a time synchronization service to a UE, according to an embodiment of the disclosure.

FIS. 9 may illustrate a process in which the AF transmits a message for stopping a synchronization service.

The AF, the NEF, the TSCTSF, the PCF, the SMF, the AMF, the RAN, the UE, the UPF, and the UDM/UDR of FIG. 9 may be identical to the AF, the NEF, the TSCTSF, the PCF, the SMF, the AMF, the RAN, the UE, the UPF, and the UDM/UDR of FIGS. 1A to 8, respectively.

In operation S900, it may be assumed that the UE 101 has established a PDU Session with the network.

In operation S901, the AF 108 may send a Sync request (synchronization request) message to the NEF 107. This request may include a parameter requesting the stop of the Sync Service. The Sync request may include information such as target terminal information, information indicating Sync Off, DNN/S-NSSAI, and a Time Sync Domain Number.

In operation S902, the NEF 107 may determine whether there is a PCF-NEF Association. If the PCF-NEF Association is already present, the process proceeds to operation S905. If the PCF-NEF Association is not present, operation S903 is performed.

In operation S903, the NEF 107 may configure the PCF-NEF Association with the PCF 105. In this operation, the PCF 105 or the NEF 107 may interwork with the UDM 109 to perform a process to identify whether the subscriber information includes 5GS Sync Service support. Afterwards, in operation S904, the TSCTSF 106 may configure the synchronization function stop in the RAN 102, UE 101, and UPF 110.

In operation S904, the NEF 107 may send a Sync request Response (synchronization request response) message to the AF 108.

In operation 905, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S907, in case that the NEF 107 has identified that the QoS configuration request includes only a QoS Reference not a QoS Parameter or Additional Parameter, the NEF 107 may identify whether a PCF-NEF Association is present. If the PCF-NEF Association is present, the process proceeds to next operation S908. If the PCF-NEF Association is not present, the request of the AF may be rejected.

In operation S908, the NEF 107 may transmit a QoS setup or configuration request for 5GS Sync support to the PCF 105.

In operation S909, the PCF 105 may transmit the QoS setup or configuration request to the SMF 104.

In operation S910, the SMF 104 may transmit the QoS setup or configuration request to the AMF 103.

In operation S911, the AMF 103 may transmit the QoS setup or configuration request to the RAN 102, and the RAN 102 may perform resource allocation through scheduling for supporting the delay time and the packet loss rate.

In operation S912, the RAN 102 may additionally perform a QoS configuration with the UE 101 by transmitting QoS setup or configuration-related requirement information to the UE 101.

In operation S913, the SMF 104 may transmit QoS setup or configuration-related information to the UPF 110 so as to perform a configuration required when the UPF 110 transmits User Traffic.

After the QoS setup is completed, in operation 914, the AF 108 may transmit the QoS configuration (update) request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S915, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S916a. When it is determined that general QoS is requested, the PCF may be selected based on the PCF-NEF Association configuration to perform operation 916b.

The QoS configuration for the 5GS Sync Service may be performed in operation S916a, as in operations S808 to S814 in FIG. 8.

The general QoS configuration may be performed in operation S916b, as in operations S908 to S913 in FIG. 9.

However, in case that the AF 108 belongs to a service provider, this operation may be performed without the NEF 107, and in this case, it may be considered as the NEF 107 is combined with the AF 108.

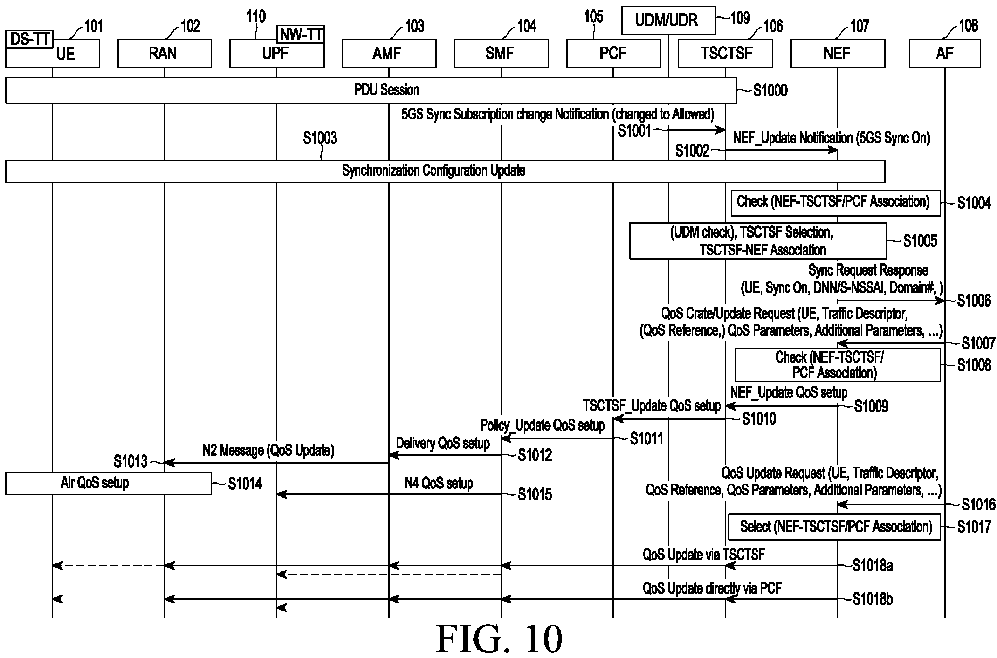

FIG. 10 illustrates a process of configuring a QoS according to a change in subscriber information in case that a network provides a time synchronization service to a UE according to an embodiment of the disclosure.

FIS. 10 may illustrate a process of transmitting a synchronization notification message when subscriber information is changed to synchronization service allowed.

The AF, the NEF, the TSCTSF, the PCF, the SMF, the AMF, the RAN, the UE, the UPF, and the UDM/UDR of FIG. 10 may be identical to the AF, the NEF, the TSCTSF, the PCF, the SMF, the AMF, the RAN, the UE, the UPF, and the UDM/UDR of FIGS. 1A to 9, respectively.

In operation S1000, it may be assumed that the UE 101 has established a PDU Session with the network.

In operation S1001, in order to start or restart the Sync Service by the change in subscriber information in case that the 5GC is capable of providing the Synchronization Service to the UE, a changed content of the subscriber information may be notified to the TSCTSF 106 by the UDM/UDR 109.

In operation S1002, the TSCTSF 106 may start the 5GS Sync Service, and accordingly, the TSCTSF 106 may again notify the NEF 107 of the 5GS Synchronization start notification message again.

Afterwards, in operation S1003, the TSCTSF 106 may configure the start for synchronization function configuration update in the RAN 102, UE 101, and UPF 110.

In operation S1004, the NEF 107 may determine whether there is a TSCTSF-NEF association. If the TSCTSF-NEF Association is already present, the process proceeds to operation S1006. If the TSCTSF-NEF Association is not present, operation S1005 is performed.

In operation S1005, the NEF 107 may configure the TSCTSF-NEF Association with the TSCTSF 106. In this operation, the TSCTSF 106 or the NEF 107 may interwork with the UDM 109 to perform a process to identify whether the subscriber information includes 5GS Sync Service support.

In operation S1006, the NEF 107 may send a Sync request Response (synchronization request response) message to the AF 108.

In operation 1007, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S1008, in case that the NEF 107 has identified that the QoS configuration request includes a QoS Parameter or Additional Parameter, the NEF 107 may identify whether a TSCTSF-NEF Association is present. If the TSCTSF-NEF Association is present, the process proceeds to next operation S1009. If the TSCTSF-NEF Association is not present, the request of the AF may be rejected.

In operation S1009, the NEF 107 may send a QoS setup or configuration request for 5GS Sync support to the TSCTSF 106.

In operation S1010, the TSCTSF 106 may convert a content required for the Time Sync Service and configure additional information such as a Periodicity, an Arrival Time, and a flow direction, and may transmit information such as a delay time, a packet loss rate, and a data rate together with the QoS setup or request to the PCF 105.

In operation S1011, the PCF 105 may include a QoS setup or configuration request and QoS additional information in a message and transmit the message to the SMF 104.

In operation S1012, the SMF 104 may transmit the received QoS setup or configuration request and QoS additional information to the AMF 103.

In operation S1013, the AMF 103 transmits the QoS setup or configuration request and the QoS additional information to the RAN 102, and the RAN 102 may perform resource allocation through scheduling to support a delay time and a packet loss rate and scheduling for a Periodicity, an Arrival Time, and a flow direction concurrently.

In operation S1014, the RAN 102 may additionally perform a QoS configuration with the UE by transmitting QoS configuration-related requirement information to the UE 101.

In operation S1015, the SMF 104 may transmit QoS configuration-related information to the UPF 110 so as to perform a configuration required when the UPF 110 transmits User Traffic.

After the QoS setup is completed, in operation S1016, the AF 108 may transmit the QoS update request (configuration) to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1017, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1018a. When it is determined that general QoS is requested, the PCF may be selected based on the PCF-NEF Association configuration to perform operation 1018b.

The QoS configuration for the 5GS Sync Service may be performed in operation S1018a, as in operations S1009 to S1015.

In operation S1018b, the NEF 107 may transmit the QoS configuration request to the PCF 105. The PCF 105 may transmit the QoS configuration request to the SMF 104. The SMF 104 may transmit the QoS configuration request to the AMF 103. The AMF 103 may transmit the QoS configuration request to the RAN 102, and the RAN 102 may perform resource allocation through scheduling for supporting the delay time, the packet loss rate, the data rate, and the like. The RAN 102 may additionally perform a QoS configuration with the UE 101 by transmitting QoS configuration-related requirement information to the UE 101. The SMF 104 may transmit QoS configuration-related information to the UPF 110 so as to perform a configuration required when the UPF 110 transmits User Traffic.

However, in case that the AF 108 belongs to a service provider, this operation may be performed without the NEF 107, and in this case, it may be considered as the NEF 107 is combined with the AF 108.

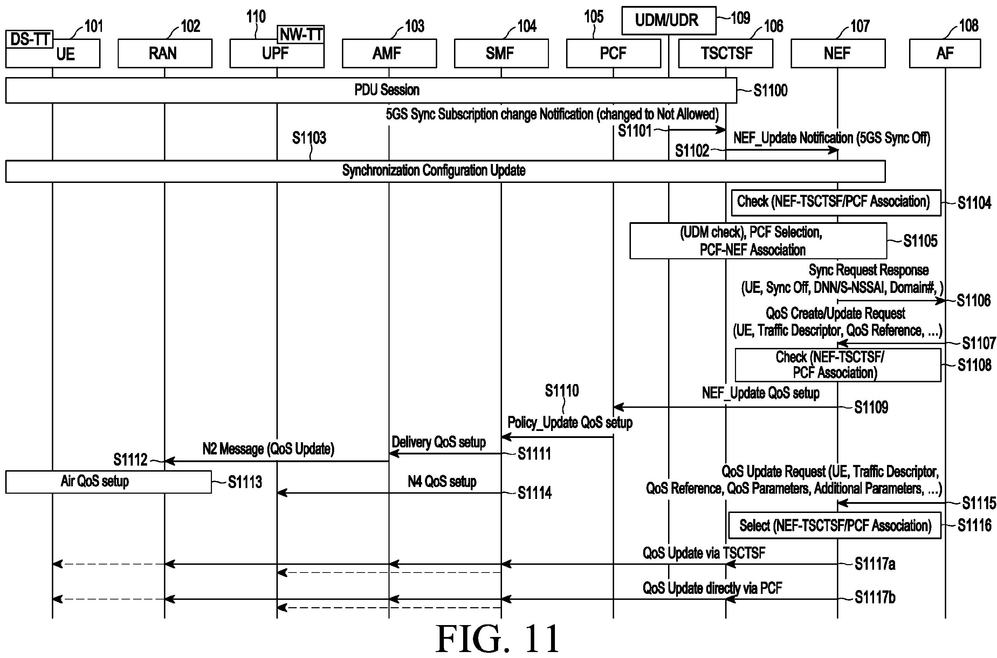

FIG. 11 illustrates a process of configuring a QoS according to a change in subscriber information in case that a network provides a time synchronization service to a UE according to an embodiment of the disclosure.

FIS. 11 may illustrate a process of transmitting a synchronization notification message when subscriber information is changed to synchronization service not allowed.

The AF, the NEF, the TSCTSF, the PCF, the SMF, the AMF, the RAN, the UE, the UPF, and the UDM/UDR of FIG. 11 may be identical to the AF, the NEF, the TSCTSF, the PCF, the SMF, the AMF, the RAN, the UE, the UPF, and the UDM/UDR of FIGS. 1A to 10, respectively.

In operation S1100, it may be assumed that the UE 101 has established a PDU Session with the network.

In operation S1101, in order to stop the Sync Service by the change in subscriber information in case that the 5GC is capable of providing the Synchronization Service to the UE, a changed content of subscriber information may be notified to the TSCTSF 106 by the UDM/UDR 109.

In operation S1102, the TSCTSF 106 may stop the 5GS Sync Service, and accordingly, the TSCTSF 106 may again notify the NEF 107 of the 5GS Synchronization stop notification message.

Afterwards, in operation S1103, the TSCTSF 106 may configure the synchronization function configuration stop in the RAN 102, UE 101, and UPF 110.

In operation S1104, the NEF 107 may determine whether there is a PCF-NEF Association. If the PCF-NEF Association is already present, the process proceeds to operation S1106. If the PCF-NEF Association is not present, operation S1105 is performed.

In operation S1105, the NEF 107 may configure the PCF-NEF Association with the PCF 105. In this operation, the PCF 105 or the NEF 107 may interwork with the UDM 109 to perform a process to identify whether the subscriber information includes 5GS Sync Service support.

In operation S1106, the NEF 107 may send a Sync request Response (synchronization request response) message to the AF 108.

In operation 1107, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S1108, in case that the NEF 107 has identified that the QoS configuration request includes only a QoS Reference not a QoS Parameter or Additional Parameter, the NEF 107 may identify whether a PCF-NEF Association is present. If the PCF-NEF Association is present, the process proceeds to next operation S1109. If the PCF-NEF Association is not present, the request of the AF may be rejected.

In operation S1109, the NEF 107 may send a QoS setup or configuration request for 5GS Sync support to the TSCTSF 106.

In operation S1110, the PCF 105 may transmit the QoS setup or configuration request to the SMF 104.

In operation S1111, the SMF 104 may transmit the QoS setup or configuration request to the AMF 103.

In operation S1112, the AMF 103 may transmit the QoS setup or configuration request to the RAN 102, and the RAN 102 may perform resource allocation through scheduling for supporting the delay time and the packet loss rate.

In operation S1113, the RAN 102 may additionally perform a QoS configuration with the UE 101 by transmitting QoS setup or configuration-related requirement information to the UE 101.

In operation S1114, the SMF 104 may transmit QoS setup or configuration-related information to the UPF 110 so as to perform a configuration required when the UPF 110 transmits User Traffic.

After the QoS setup is completed, in operation 1115, the AF 108 may transmit the QoS configuration (update) request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1116, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1117a. When it is determined that general QoS is requested, the PCF may be selected based on the PCF-NEF Association configuration to perform operation 1117b.

The QoS configuration for the 5GS Sync Service may be performed in operation S1117a, as in operations S1009 to S1015 in FIG. 10.

The general QoS configuration may be performed in operation S1117b, as in operations S1109 to S1114 in FIG. 11.

However, in case that the AF 108 belongs to a service provider, this operation may be performed without the NEF 107, and in this case, it may be considered as the NEF 107 is combined with the AF 108.

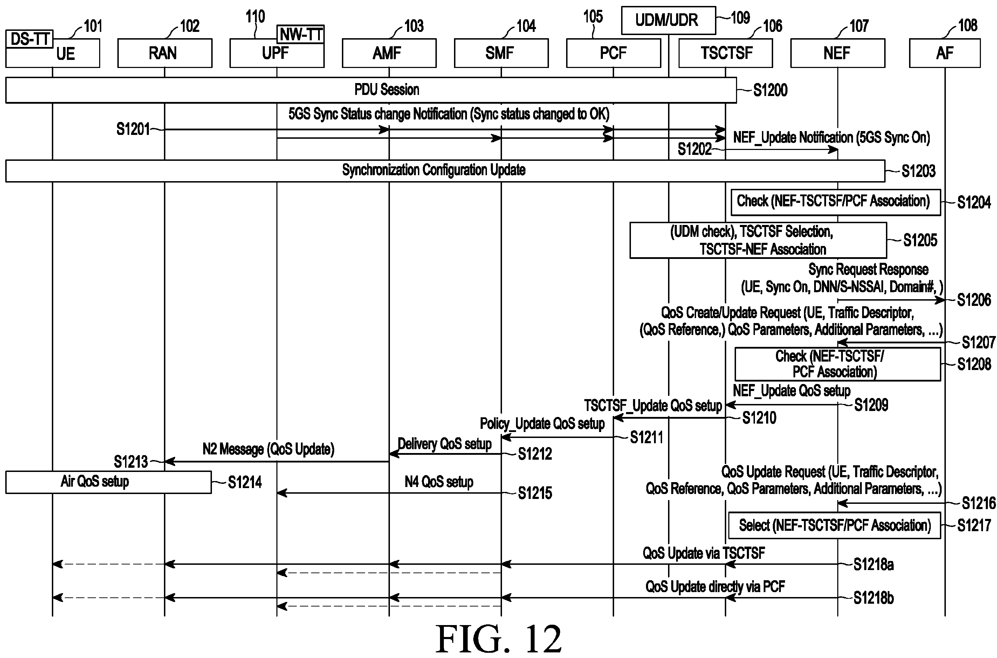

FIG. 12 illustrates a process of configuring a QoS according to a change in synchronization state in case that a network provides a time synchronization service to a UE according to an embodiment of the disclosure.

FIS. 12 may illustrate a process of transmitting a synchronization state change message when the synchronization state is changed to synchronization service allowed.

The AF, the NEF, the TSCTSF, the PCF, the SMF, the AMF, the RAN, the UE, the UPF, and the UDM/UDR of FIG. 12 may be identical to the AF, the NEF, the TSCTSF, the PCF, the SMF, the AMF, the RAN, the UE, the UPF, and the UDM/UDR of FIGS. 1A to 11, respectively.

In operation S1200, it may be assumed that the UE 101 has established a PDU Session with the network.

In operation S1201, in case that the 5GC is capable of providing the Synchronization Service to the UE, a message (status) indicating that the Sync Service may be started based on the 5GS synchronization state (Sync Status) may be notified to the TSCTSF 106 from the RAN 102, the UPF 110, or the OAM (not shown).

In operation S1202, the TSCTSF 106 may start the 5GS Sync Service, and accordingly, the TSCTSF 106 may again notify the NEF 107 of the 5GS Synchronization start notification message.

Afterwards, in operation S1203, the TSCTSF 106 may configure the start for synchronization function configuration update in the RAN 102, UE 101, and UPF 110.

In operation S1204, the NEF 107 may determine whether there is a TSCTSF-NEF association. If the TSCTSF-NEF Association is already present, the process proceeds to operation S1006. If the TSCTSF-NEF Association is not present, operation S1005 is performed.

In operation S1205, the NEF 107 may configure the TSCTSF-NEF Association with the TSCTSF 106. In this operation, the TSCTSF 106 or the NEF 107 may interwork with the UDM 109 to perform a process to identify whether the subscriber information includes 5GS Sync Service support.

In operation S1206, the NEF 107 may send a Sync request Response (synchronization request response) message to the AF 108.

In operation 1207, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S1208, in case that the NEF 107 has identified that the QoS configuration request includes a QoS Parameter or Additional Parameter, the NEF 107 may identify whether a TSCTSF-NEF Association is present. If the TSCTSF-NEF Association is present, the process proceeds to next operation S1009. If the TSCTSF-NEF Association is not present, the request of the AF may be rejected.

In operation S1209, the NEF 107 may send a QoS setup or configuration request for 5GS Sync support to the TSCTSF 106.

In operation S1210, the TSCTSF 106 may convert a content required for the Time Sync Service and configure additional information such as a Periodicity, an Arrival Time, and a flow direction, and may transmit information such as a delay time, a packet loss rate, and a data rate together with the QoS setup or request to the PCF 105.

In operation S1211, the PCF 105 may include a QoS setup or configuration request and QoS additional information in a message and transmit the message to the SMF 104.

In operation S1212, the SMF 104 may transmit the received QoS setup or configuration request and QoS additional information to the AMF 103.

In operation S1213, the AMF 103 transmits the QoS setup or configuration request and the QoS additional information to the RAN 102, and the RAN 102 may perform resource allocation through scheduling to support a delay time and a packet loss rate and scheduling for a Periodicity, an Arrival Time, and a flow direction concurrently.

In operation S1214, the RAN 102 may additionally perform a QoS configuration with the UE by transmitting QoS configuration-related requirement information to the UE 101.

In operation S1215, the SMF 104 may transmit QoS configuration-related information to the UPF 110 so as to perform a configuration required when the UPF 110 transmits User Traffic.

After the QoS setup is completed, in operation S1216, the AF 108 may transmit the QoS update request (configuration) to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1217, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1218a. When it is determined that general QoS is requested, the PCF may be selected based on the PCF-NEF Association configuration to perform operation 1218b.

The QoS configuration for the 5GS Sync Service may be performed in operation S1218a, as in operations S1209 to S1215.

In operation S1218b, the NEF 107 may transmit the QoS configuration request to the PCF 105. The PCF 105 may transmit the QoS configuration request to the SMF 104. The SMF 104 may transmit the QoS configuration request to the AMF 103. The AMF 103 may transmit the QoS configuration request to the RAN 102, and the RAN 102 may perform resource allocation through scheduling for supporting the delay time, the packet loss rate, the data rate, and the like. The RAN 102 may additionally perform a QoS configuration with the UE 101 by transmitting QoS configuration-related requirement information to the UE 101. The SMF 104 may transmit QoS configuration-related information to the UPF 110 so as to perform a configuration required when the UPF 110 transmits User Traffic.

However, in case that the AF 108 belongs to a service provider, this operation may be performed without the NEF 107, and in this case, it may be considered as the NEF 107 is combined with the AF 108.

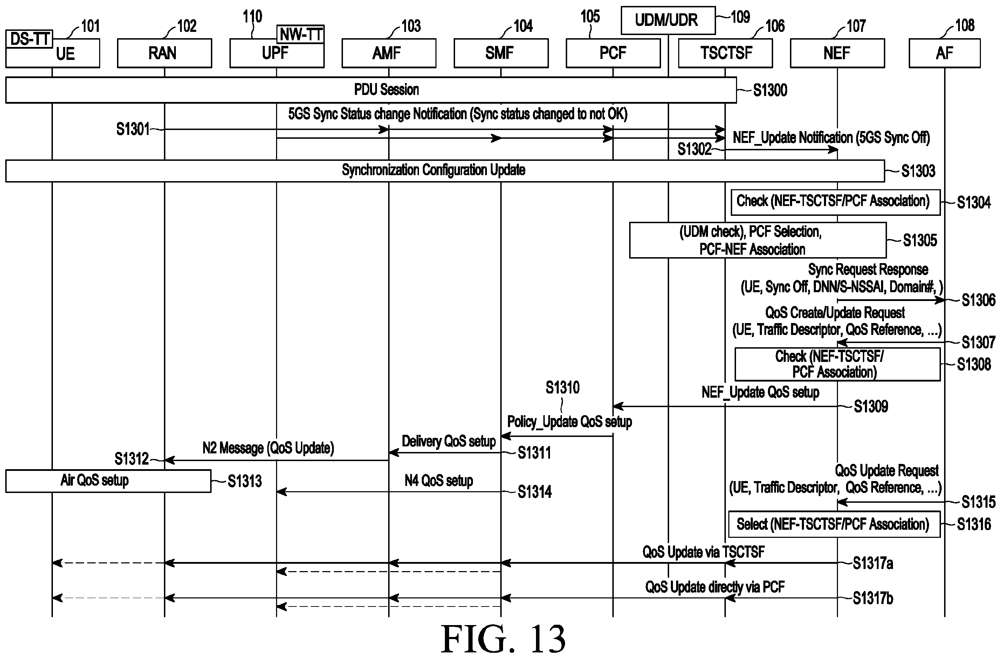

FIG. 13 illustrates a process of configuring a QoS according to a change in synchronization state in case that a network provides a time synchronization service to a UE according to an embodiment of the disclosure.

FIS. 13 may illustrate a process of transmitting a synchronization state change message when the synchronization state is changed to synchronization service allowed.

The AF, the NEF, the TSCTSF, the PCF, the SMF, the AMF, the RAN, the UE, the UPF, and the UDM/UDR of FIG. 13 may be identical to the AF, the NEF, the TSCTSF, the PCF, the SMF, the AMF, the RAN, the UE, the UPF, and the UDM/UDR of FIGS. 1A to 12, respectively.

In operation S1300, it may be assumed that the UE 101 has established a PDU Session with the network.

In operation S1301, in case that the 5GC is capable of providing the Synchronization Service to the UE, a message (status) indicating that the Sync Service may be stopped based on the 5GS synchronization state (Sync Status) may be notified to the TSCTSF 106 from the RAN 102, the UPF 110, or the OAM (not shown).

In operation S1302, the TSCTSF 106 may start the 5GS Sync Service, and accordingly, the TSCTSF 106 may again notify the NEF 107 of the 5GS Synchronization stop notification message.

Afterwards, in operation S1303, the TSCTSF 106 may configure the synchronization function configuration stop in the RAN 102, UE 101, and UPF 110.

In operation S1304, the NEF 107 may determine whether there is a PCF-NEF Association. If the PCF-NEF Association is already present, the process proceeds to operation S1306. If the PCF-NEF Association is not present, operation S1305 is performed.

In operation S1305, the NEF 107 may configure the PCF-NEF Association with the PCF 105. In this operation, the PCF 105 or the NEF 107 may interwork with the UDM 109 to perform a process to identify whether the subscriber information includes 5GS Sync Service support.

In operation S1306, the NEF 107 may send a Sync request Response (synchronization request response) message to the AF 108.

In operation 1307, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S1308, in case that the NEF 107 has identified that the QoS configuration request includes only a QoS Reference not a QoS Parameter or Additional Parameter, the NEF 107 may identify whether a PCF-NEF Association is present. If the PCF-NEF Association is present, the process proceeds to next operation S1309. If the PCF-NEF Association is not present, the request of the AF may be rejected.

In operation S1309, the NEF 107 may send a QoS setup or configuration request for 5GS Sync support to the TSCTSF 106.

In operation S1310, the PCF 105 may transmit the QoS setup or configuration request to the SMF 104.

In operation S1311, the SMF 104 may transmit the QoS setup or configuration request to the AMF 103.

In operation S1312, the AMF 103 may transmit the QoS setup or configuration request to the RAN 102, and the RAN 102 may perform resource allocation through scheduling for supporting the delay time and the packet loss rate.

In operation S1313, the RAN 102 may additionally perform a QoS configuration with the UE 101 by transmitting QoS setup or configuration-related requirement information to the UE 101.

In operation S1314, the SMF 104 may transmit QoS setup or configuration-related information to the UPF 110 so as to perform a configuration required when the UPF 110 transmits User Traffic.

After the QoS setup is completed, in operation 1315, the AF 108 may transmit the QoS configuration (update) request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1316, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1317a. When it is determined that general QoS is requested, the PCF may be selected based on the PCF-NEF Association configuration to perform operation 1317b.

The QoS configuration for the 5GS Sync Service may be performed in operation S1317a, as in operations S1309 to S1315 in FIG. 12.

The general QoS configuration may be performed in operation S1317b, as in operations S1309 to S1314 in FIG. 13.

However, in case that the AF 108 belongs to a service provider, this operation may be performed without the NEF 107, and in this case, it may be considered as the NEF 107 is combined with the AF 108.

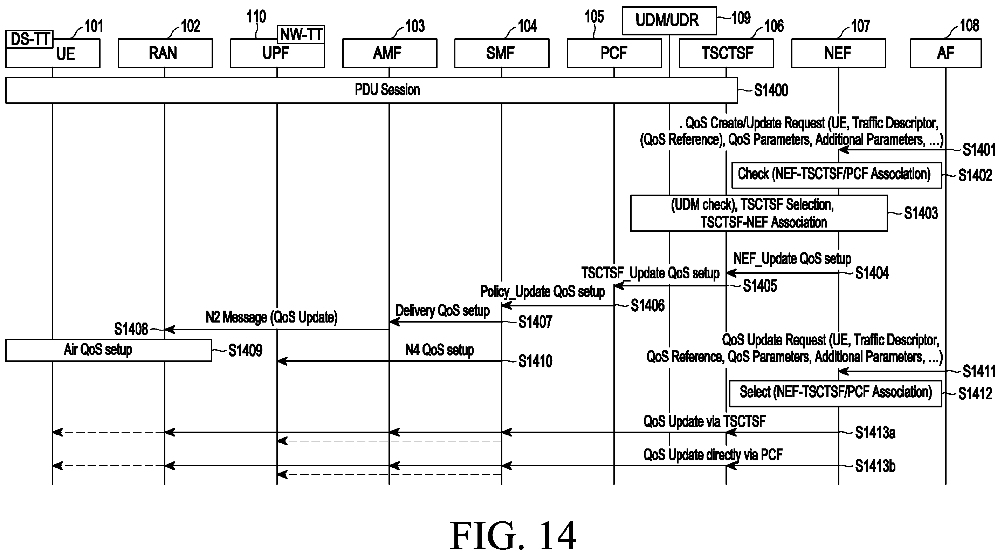

FIG. 14 illustrates a process in which a network configures QoS to a UE for a Sync Service, an Interactive Service, and an XRM Service based on an AF request according to an embodiment of the disclosure.

FIG. 14 may illustrate a process of a case in which the QoS parameter and/or the Additional parameter is included in the QoS request of the AF.

The AF, the NEF, the TSCTSF, the PCF, the SMF, the AMF, the RAN, the UE, the UPF, and the UDM/UDR of FIG. 14 may be identical to the AF, the NEF, the TSCTSF, the PCF, the SMF, the AMF, the RAN, the UE, the UPF, and the UDM/UDR of FIGS. 1A to 13, respectively.

In operation S1400, it may be assumed that the UE 101 has established a PDU Session with the network.

In operation S1401, the AF 108 may transmit a 5GS QoS configuration request (e.g., a QoS generation/update request) to the NEF. The QoS configuration request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. Here, the QoS Reference may not be included.

In operation S1402, in case that the QoS configuration request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC Service, the NEF 107 may identify whether there is a TSCTSF-NEF Association configuration. If the TSCTSF-NEF Association is already present, the process proceeds to operation S1404. If the TSCTSF-NEF Association is not present, operation S1403 is performed.

In operation S1403, the NEF 107 may configure the TSCTSF-NEF Association with the TSCTSF 106. In this operation, the TSCTSF 106 or the NEF 107 may interwork with the UDM 109 to perform a process to identify whether the subscriber information includes 5GS Sync Service support.

In operation S1404, the NEF 107 may send a QoS setup or configuration request for the Sync Service, the Interactive Service, and the XRM Service to the TSCTSF 106.

In operation S1405, the TSCTSF 106 may convert a content required for QoS provision for the Sync Service, the Interactive Service, and the XRM Service and configure additional information such as a Periodicity, an Arrival Time, and a flow direction, and may transmit information such as a delay time, a packet loss rate, and a data rate together with the QoS request to the PCF 105.

In operation S1406, the PCF 105 may include a QoS setup or configuration request and QoS additional information in a message and transmit the message to the SMF 104.

In operation S1407, the SMF 104 may transmit the received QoS setup or configuration request and QoS additional information to the AMF 103.

In operation S1408, the AMF 103 transmits the QoS setup or configuration request and the QoS additional information to the RAN 102, and the RAN 102 may perform resource allocation through scheduling to support a delay time and a packet loss rate and scheduling for a Periodicity, an Arrival Time, and a flow direction concurrently.

In operation S1409, the RAN 102 may additionally perform a QoS configuration with the UE by transmitting QoS configuration-related requirement information to the UE 101.

In operation S1410, the SMF 104 may transmit QoS configuration-related information to the UPF 110 so as to perform a configuration required when the UPF 110 transmits User Traffic.

After the QoS setup is completed, in operation S1411, the AF 108 may transmit the QoS update request (configuration) to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1412, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1413a. When it is determined that general QoS is requested, the PCF may be selected based on the PCF-NEF Association configuration to perform operation 1413b.

The QoS configuration for the 5GS Sync Service may be performed in operation S1413a, as in operations S1404 to S1410.

In operation S1413b, the NEF 107 may transmit the QoS configuration request to the PCF 105. The PCF 105 may transmit the QoS configuration request to the SMF 104. The SMF 104 may transmit the QoS configuration request to the AMF 103. The AMF 103 may transmit the QoS configuration request to the RAN 102, and the RAN 102 may perform resource allocation through scheduling for supporting the delay time, the packet loss rate, the data rate, and the like. The RAN 102 may additionally perform a QoS configuration with the UE 101 by transmitting QoS configuration-related requirement information to the UE 101. The SMF 104 may transmit QoS configuration-related information to the UPF 110 so as to perform a configuration required when the UPF 110 transmits User Traffic.

However, in case that the AF 108 belongs to a service provider, this operation may be performed without the NEF 107, and in this case, it may be considered as the NEF 107 is combined with the AF 108.

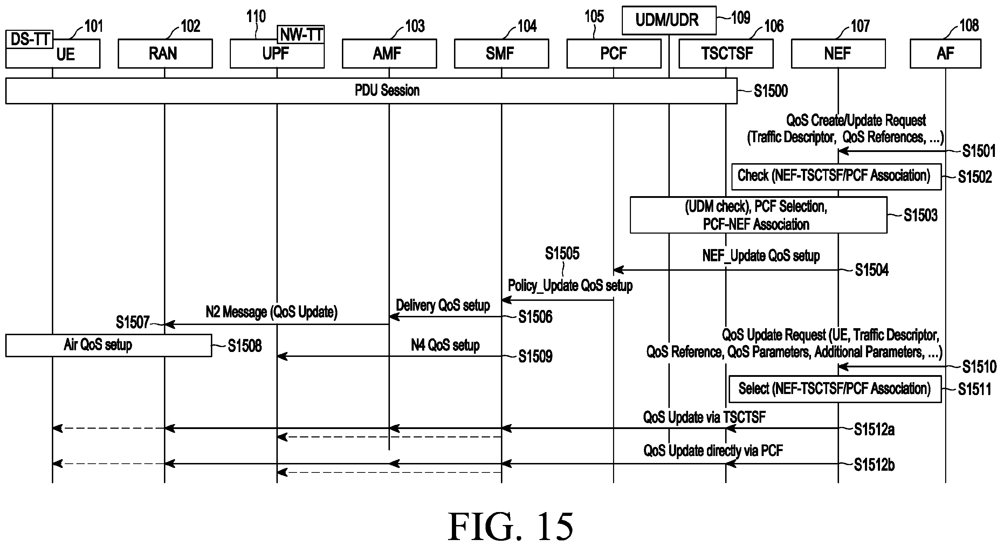

FIG. 15 illustrates a process in which a network configures QoS to a UE for a Sync Service, an Interactive Service, and an XRM Service based on an AF request according to an embodiment of the disclosure.

FIG. 15 may illustrate a process of a case in which a QoS Reference is included in the QoS request of the AF without the QoS parameter and/or the Additional parameter.

The AF, the NEF, the TSCTSF, the PCF, the SMF, the AMF, the RAN, the UE, the UPF, and the UDM/UDR of FIG. 15 may be identical to the AF, the NEF, the TSCTSF, the PCF, the SMF, the AMF, the RAN, the UE, the UPF, and the UDM/UDR of FIGS. 1A to 14, respectively.

In operation S1500, it may be assumed that the UE 101 has established a PDU Session with the network.

In operation S1501, the AF 108 may transmit a 5GS QoS configuration request (e.g., a QoS generation/update request) to the NEF. This QoS configuration request may include target terminal information, Traffic Descriptors such as the IP/Ethernet address and port number of the UE/server, a protocol, and a QoS Reference based on standardized QoS values.

In operation S1502, in case that the QoS request includes only the QoS Reference parameter, the NEF 1502 may determine that a general QoS is requested. In case that it is determined that the general QoS is requested, the NEF 107 may determine whether there is a PCF-NEF Association. If the PCF-NEF Association is present, the process proceeds to operation S1504. If the PCF-NEF Association is not present, operation S1503 is performed.

In operation S1503, the NEF 107 may configure the PCF-NEF Association with the PCF 105. In this operation, the PCF 105 or the NEF 107 may interwork with the UDM 109 to perform a process to identify whether the subscriber information includes 5GS Sync Service support.

In operation S1504, the NEF 107 may transmit a QoS setup or configuration request for 5GS Sync support to the PCF 105.

In operation S1505, the PCF 105 may transmit the QoS setup or configuration request to the SMF 104.

In operation S1506, the SMF 104 may transmit the QoS setup or configuration request to the AMF 103.

In operation S1507, the AMF 103 may transmit the QoS setup or configuration request to the RAN 102, and the RAN 102 may perform resource allocation through scheduling for supporting the delay time and the packet loss rate.

In operation S1508, the RAN 102 may additionally perform a QoS configuration with the UE 101 by transmitting QoS setup or configuration-related requirement information to the UE 101.

In operation S1509, the SMF 104 may transmit QoS setup or configuration-related information to the UPF 110 so as to perform a configuration required when the UPF 110 transmits User Traffic.

After the QoS setup is completed, in operation 1510, the AF 108 may transmit the QoS configuration (update) request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1511, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1512a. When it is determined that general QoS is requested, the PCF may be selected based on the PCF-NEF Association configuration to perform operation 1512b.

The QoS configuration for the 5GS Sync Service may be performed in operation S1512a, as in operations S1404 to S1410 in FIG. 14.

The general QoS configuration may be performed in operation S1512b, as in operations S1504 to S1509 in FIG. 15.

However, in case that the AF 108 belongs to a service provider, this operation may be performed without the NEF 107, and in this case, it may be considered as the NEF 107 is combined with the AF 108.

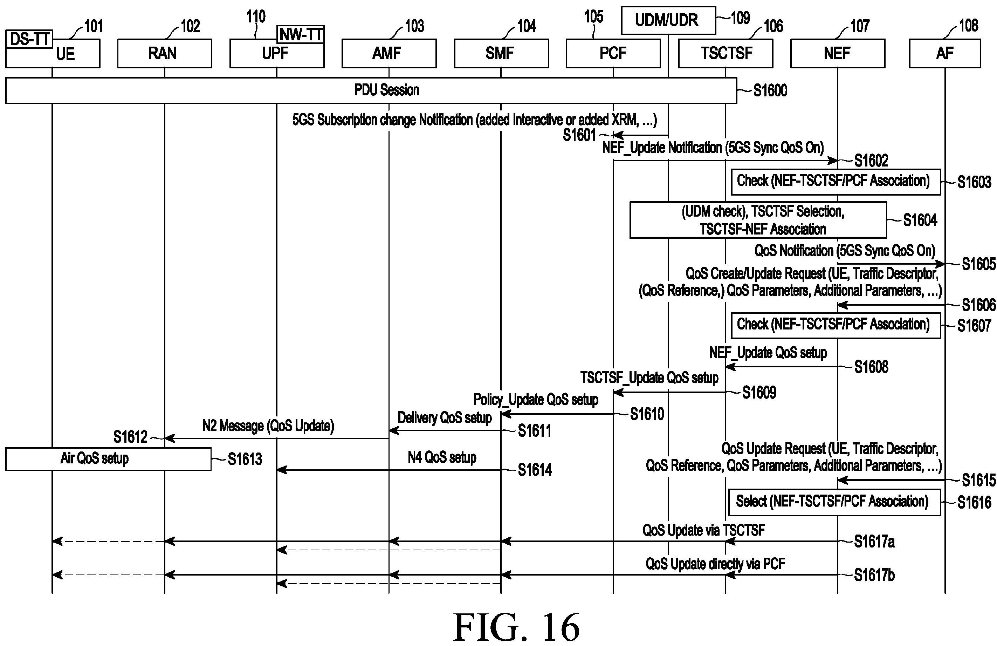

FIG. 16 illustrates a process of configuring a QoS for a Sync Service, an Interactive Service, and an XRM Service according to a change in subscriber information according to an embodiment of the disclosure.

FIG. 16 may illustrate the process in which an Interactive Service or XRM Service is changed to be supportable in the subscriber information.

The AF, the NEF, the TSCTSF, the PCF, the SMF, the AMF, the RAN, the UE, the UPF, and the UDM/UDR of FIG. 16 may be identical to the AF, the NEF, the TSCTSF, the PCF, the SMF, the AMF, the RAN, the UE, the UPF, and the UDM/UDR of FIGS. 1A to 15, respectively.

In operation S1600, it may be assumed that the UE 101 has established a PDU Session with the network.

In operation S1601, in order to provide the QoS for the Sync Service, the Interactive Service, and the XRM Service according to the change in the subscriber information in case that the 5GC is capable of providing the Sync Service, the Interactive Service, and the XRM Service by the change in the subscriber information, the UDM/UDR 109 may notify a changed content of the subscriber information to the PCF 105.

In operation S1602, the PCF 105 may start to provide the QoS for the Sync Service, the Interactive Service, and the XRM Service according to the change in the 5GS subscriber information, and accordingly, the PCF 105 may again notify the NEF 107 of a QoS provision notification for the Sync Service, the Interactive Service, and the XRM Service according to the change in the subscriber information.

In operation S1603, the NEF 107 may determine whether there is a TSCTSF-NEF Association configuration. If the TSCTSF-NEF Association is already present, the process proceeds to operation S1605. If the TSCTSF-NEF Association is not present, operation S1604 is performed.

In operation S1604, the NEF 107 may configure the TSCTSF-NEF Association with the TSCTSF 106. In this operation, the TSCTSF 106 or the NEF 107 may interwork with the UDM 109 to perform a process to identify whether the subscriber information includes Sync Service, Interactive Service, XRM Service support.

In operation S1605, the NEF 107 may send the QoS Notification to the AF 108 to notify that provision of the QoS for the Sync Service, the Interactive Service, and the XRM Service is possible.

In operation 1606, the AF 108 may transmit the QoS update request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time. In this case, the QoS Reference may be omitted, but the QoS Parameters or Additional Parameters must be included.

In operation S1607, in case that the NEF 107 has identified that the QoS configuration request includes a QoS Parameter or Additional Parameter, the NEF 107 may identify whether a TSCTSF-NEF Association is present. If the TSCTSF-NEF Association is present, the process proceeds to next operation S1608. If the TSCTSF-NEF Association is not present, the request of the AF may be rejected.

In operation S1608, the NEF 107 may send to the TSCTSF 106 a QoS setup or configuration request for the Sync Service, the Interactive Service, and the XRM Service according to the subscriber information change.

In operation S1609, the TSCTSF 106 may convert a content required when providing the QoS for the Sync Service, the Interactive Service, and the XRM Service and configure additional information such as a Periodicity, an Arrival Time, and a flow direction, and may transmit information such as a delay time, a packet loss rate, and a data rate together with the QoS setup or configuration request to the PCF 105.

In operation S1610, the PCF 105 may include a QoS setup or configuration request and QoS additional information in a message and transmit the message to the SMF 104.

In operation S1611, the SMF 104 may transmit the received QoS setup or configuration request and QoS additional information to the AMF 103.

In operation S1612, the AMF 103 transmits the QoS setup or configuration request and the QoS additional information to the RAN 102, and the RAN 102 may perform resource allocation through scheduling to support a delay time and a packet loss rate and scheduling for a Periodicity, an Arrival Time, and a flow direction concurrently.

In operation S1613, the RAN 102 may additionally perform a QoS configuration with the UE by transmitting QoS configuration-related requirement information to the UE 101.

In operation S1614, the SMF 104 may transmit QoS configuration-related information to the UPF 110 so as to perform a configuration required when the UPF 110 transmits User Traffic.

After the QoS setup is completed, in operation S1615, the AF 108 may transmit the QoS update request (configuration) to the NEF 107. The QoS request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1616, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1617a. When it is determined that general QoS is requested, the PCF may be selected based on the PCF-NEF Association configuration to perform operation 1617b.

The QoS configuration for the 5GS Sync Service may be performed in operation S1617a, as in operations S1608 to S1614.

In operation S1617b, the NEF 107 may transmit the QoS configuration request to the PCF 105. The PCF 105 may transmit the QoS configuration request to the SMF 104. The SMF 104 may transmit the QoS configuration request to the AMF 103. The AMF 103 may transmit the QoS configuration request to the RAN 102, and the RAN 102 may perform resource allocation through scheduling for supporting the delay time, the packet loss rate, the data rate, and the like. The RAN 102 may additionally perform a QoS configuration with the UE 101 by transmitting QoS configuration-related requirement information to the UE 101. The SMF 104 may transmit QoS configuration-related information to the UPF 110 so as to perform a configuration required when the UPF 110 transmits User Traffic.

However, in case that the AF 108 belongs to a service provider, this operation may be performed without the NEF 107, and in this case, it may be considered as the NEF 107 is combined with the AF 108.

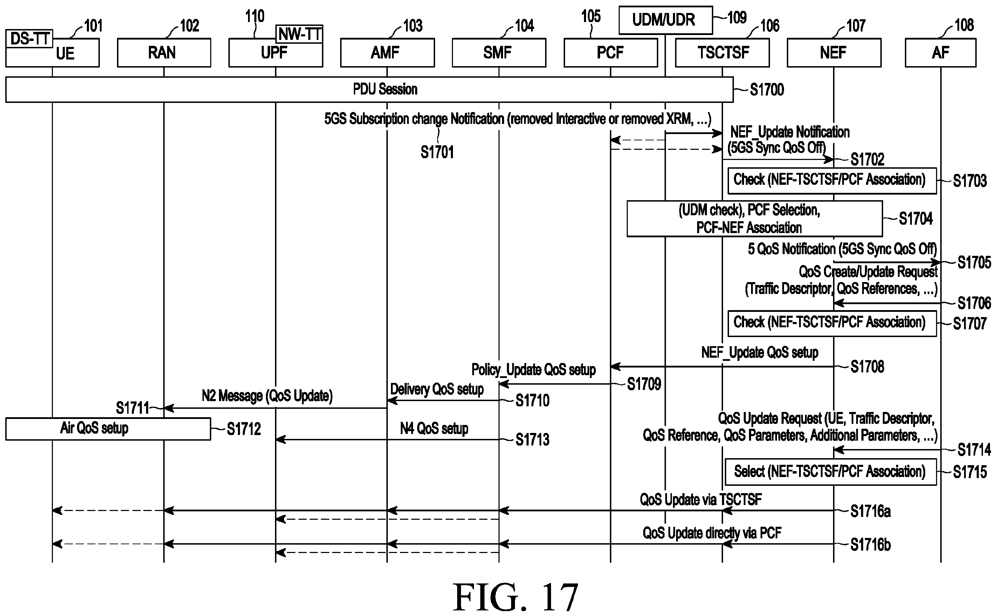

FIG. 17 illustrates a process of configuring a QoS for a Sync Service, an Interactive Service, and an XRM Service according to a change in subscriber information according to an embodiment of the disclosure.

FIG. 17 may illustrate the process in which an Interactive Service or XRM Service is changed to be unsupportable in the subscriber information.

The AF, the NEF, the TSCTSF, the PCF, the SMF, the AMF, the RAN, the UE, the UPF, and the UDM/UDR of FIG. 17 may be identical to the AF, the NEF, the TSCTSF, the PCF, the SMF, the AMF, the RAN, the UE, the UPF, and the UDM/UDR of FIGS. 1A to 16, respectively.

In operation S1700, it may be assumed that the UE 101 has established a PDU Session with the network.

In operation S1701, in order to stop providing the QoS for the Sync Service, the Interactive Service, and the XRM Service according to the change in the subscriber information in case that the 5GC is capable of providing the Sync Service, the Interactive Service, and the XRM Service by the change in the subscriber information, the UDM/UDR 109 may notify a changed content of the subscriber information to the TSCTSF 106. In this case, depending on a connection establishment state, the changed content in the subscriber information may be notified from the UDM/UDR 109 to the TSCTSF 106 through the PCF 105.

In operation S1702, the TSCTSF 106 may stop providing the QoS for the Sync Service, the Interactive Service, and the XRM Service by the change in the 5GS subscriber information, and accordingly, the PCF 105 may again notify the NEF 107 of the stop of QoS provision for the Sync Service, the Interactive Service, and the XRM Service according to the change in the subscriber information.

In operation S1703, the NEF 107 may determine whether there is a PCF-NEF Association. If the PCF-NEF Association is already present, the process proceeds to operation S1705. If the PCF-NEF Association is not present, operation S1704 is performed.

In operation S1704, the NEF 107 may configure the PCF-NEF Association with the PCF 105. In this operation, the PCF 105 or the NEF 107 may interwork with the UDM 109 to perform a process to identify whether the subscriber information includes 5GS Sync Service support.

In operation S1705, the NEF 107 may send the QoS Notification (5GS Sync QoS Off) to the AF 108 to notify that provision of the QoS for the Sync Service, the Interactive Service, and the XRM Service is stopped.

In operation S1706, the AF 108 may transmit the QoS setup or configuration request to the NEF 107. This QoS setup or configuration request may include only target terminal information, Traffic Descriptors such as the IP/Ethernet address and port number of the UE/server, a protocol, and a QoS Reference based on standardized QoS values.

In operation S1707, in case that the NEF 107 has identified that the QoS setup or configuration request includes only a QoS Reference not a QoS Parameter or Additional Parameter, the NEF 107 may identify whether a PCF-PCF Association is present. If the PCF-NEF Association is already present, the process proceeds to a next operation. If the PCF-NEF Association is not present, the request of the AF may be rejected.

In operation S1708, the NEF 107 may transmit a QoS setup or configuration request for 5GS Sync support to the PCF 105.

In operation S1709, the PCF 105 may transmit the QoS setup or configuration request to the SMF 104.

In operation S1710, the SMF 104 may transmit the QoS setup or configuration request to the AMF 103.

In operation S1711, the AMF 103 may transmit the QoS setup or configuration request to the RAN 102, and the RAN 102 may perform resource allocation through scheduling for supporting the delay time and the packet loss rate.

In operation S1712, the RAN 102 may additionally perform a QoS configuration with the UE 101 by transmitting QoS setup or configuration-related requirement information to the UE 101.

In operation S1713, the SMF 104 may transmit QoS setup or configuration-related information to the UPF 110 so as to perform a configuration required when the UPF 110 transmits User Traffic.

After the QoS setup is completed, in operation 1714, the AF 108 may transmit the QoS configuration (update) request to the NEF 107. The QoS update request may include target terminal information, a Traffic Descriptor such as an IP/Ethernet address and a Port Number of a UE/server, and a Protocol, a QoS Reference based on standardized QoS values, QoS Parameters such as a Requested 5GS Delay (optional), a Requested Priority (optional), a Requested Guaranteed Bitrate, and a Requested Maximum Bitrate, and Additional Parameters such as a flow direction, a Burst Size, a Burst Arrival Time at UE (uplink) or UPF (downlink), a Periodicity, a Time domain, and a Survival Time.

In operation S1715, in case that the QoS update request includes QoS parameters such as a Requested 5GS Delay (optional), a Requested Priority (optional), a Requested Guaranteed Bitrate, and a Requested Maximum Bitrate, or an additional parameter, such as a flow direction, a Burst Size, a Burst Arrival Time at the UE (uplink) or the UPF (downlink), a Periodicity, a Time domain, and a Survival Time, the NEF 107 may determine the QoS update request as a QoS request to start providing a QoS for the Sync Service. In case that the QoS update request includes only the QoS reference parameter, the NEF 107 may determine that provision of a general QoS is requested. When it is determined that the QoS update request corresponds to the QoS request for starting the provision of the QoS for the SYNC service, the TSCTSF may be selected based on the TSCTSF-NEF association configuration to perform operation S1716a. When it is determined that general QoS is requested, the PCF may be selected based on the PCF-NEF Association configuration to perform operation 1716b.

The QoS configuration for the 5GS Sync Service may be performed in operation S1716a, as in operations S1608 to S1614 in FIG. 16.

The general QoS configuration may be performed in operation S1716b, as in operations S1708 to S1713 in FIG. 17.

However, in case that the AF 108 belongs to a service provider, this operation may be performed without the NEF 107, and in this case, it may be considered as the NEF 107 is combined with the AF 108.

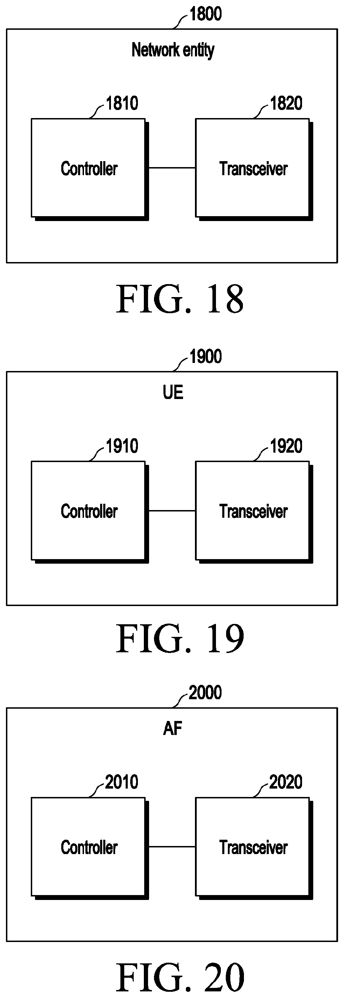

FIG. 18 illustrates a structure of a network entity according to an embodiment of the disclosure.

According to an embodiment of the disclosure, the network entity 1800 may include the RAN 102, AMF 103, SMF 104, PCF 105, TSCTSF 106, NEF 107, AF 108, UDM/UDR 109, and UPF 110 in FIGS. 1 to 17. The network entities may be all included in a single device, and the respective network entities may be divided into individual devices.

The network entity 1800 according to an embodiment of the disclosure may include a controller (or processor) 1810 which controls the overall operation of the network entity, a transceiver (or transceiving unit) 1820 which includes a transmitter and a receiver, and memory (not illustrated). Of course, the example given above is not limiting, and the network entity 1800 may include a smaller or larger number of components than the components illustrated in FIG. 18.

According to an embodiment of the disclosure, the transceiver 1820 may transmit/receive signals with UEs 101 or other network entities. The signals transmitted/received with network entities may include control information and data. In addition, the transceiver 1820 may receive signals through a radio channel, output the same to the processor 1810, and transmit signals output from the processor 1810 through the radio channel.

According to an embodiment of the disclosure, the processor 1810 may control the network entity to perform operations according to any one of the embodiments of FIGS. 1 to 17. The processor 1810, the memory (not illustrated), and the transceiver 1820 are not necessarily implemented as separate modules, but may be implemented as a single component unit such as a single chip. Also, the processor 1810 and the transceiver 1820 may be electrically connected to each other. In addition, the processor 1810 may be an application processor (AP), a communication processor (CP), a circuit, an application-specific circuit, or at least one processor.

According to an embodiment of the disclosure, the memory (not illustrated) may store basic programs, application programs, and data, such as configuration information, for operations of the network entity. In particular, the memory provides the stored data at the request of the processor 1810. The memory may include storage media such as a ROM, a RAM, a hard disk, a CD-ROM, and a DVD, or a combination of storage media. In addition, the memory may include multiple memories. Furthermore, the processor 1810 may perform the above-described embodiments of the disclosure, based on the programs for performing the embodiments, stored in the memory.

FIG. 19 illustrates a structure of a UE according to an embodiment of the disclosure.

According to an embodiment of the disclosure, the UE 1900 may include the UE 101 in FIGS. 1 to 17.

The UE 1900 according to an embodiment of the disclosure may include a controller (or processor) 1910 which controls the overall operation of the UE, a transceiver (or transceiving unit) 1920 which includes a transmitter and a receiver, and memory (not illustrated). Of course, the example given above is not limiting, and the UE may include a smaller or larger number of components than the components illustrated in FIG. 19.

According to an embodiment of the disclosure, the transceiver 1920 may transmit/receive signals with other network entities. The signals transmitted/received with the UE may include control information and data. In addition, the transceiver 1920 may receive signals through a radio channel, output the same to the processor 1910, and transmit signals output from the processor 1910 through the radio channel.

According to an embodiment of the disclosure, the processor 1910 may control the UE to perform operations according to any one of the embodiments of FIGS. 1 to 17. The processor 1910, the memory (not illustrated), and the transceiver 1920 are not necessarily implemented as separate modules, but may be implemented as a single component unit such as a single chip. Also, the processor 1910 and the transceiver 1920 may be electrically connected to each other. In addition, the processor 1910 may be an application processor (AP), a communication processor (CP), a circuit, an application-specific circuit, or at least one processor.

According to an embodiment of the disclosure, the memory (not illustrated) may store basic programs, application programs, and data, such as configuration information, for operations of the UE. In particular, the memory provides the stored data at the request of the processor 1910. The memory may include storage media such as a ROM, a RAM, a hard disk, a CD-ROM, and a DVD, or a combination of storage media. In addition, the memory may include multiple memories. Furthermore, the processor 1910 may perform the above-described embodiments of the disclosure, based on the programs for performing the embodiments, stored in the memory.

FIG. 20 illustrates a structure of an AF according to an embodiment of the disclosure.

According to an embodiment of the disclosure, the AF 2000 may include the AF 108 in FIGS. 1 to 17.

The AF 2000 according to an embodiment of the disclosure may include a controller (or processor) 2010 which controls the overall operation of the AF, a transceiver (or transceiving unit) 2020 which includes a transmitter and a receiver, and memory (not illustrated). Of course, the example given above is not limiting, and the AF 2000 may include a smaller or larger number of components than the components illustrated in FIG. 20.

According to an embodiment of the disclosure, the transceiver 2020 may transmit/receive signals with other network entities or UEs. The signals transmitted/received with the AF may include control information and data. In addition, the transceiver 2020 may receive signals through a radio channel, output the same to the processor 2010, and transmit signals output from the processor 2010 through the radio channel.

According to an embodiment of the disclosure, the processor 2010 may control the AF to perform operations according to any one of the embodiments of FIGS. 1 to 17. Of course, the processor 2010, the memory (not illustrated), and the transceiver 2020 are not necessarily implemented as separate modules, but may be implemented as a single component unit such as a single chip. Also, the processor 2010 and the transceiver 2020 may be electrically connected to each other. In addition, the processor 2010 may be an application processor (AP), a communication processor (CP), a circuit, an application-specific circuit, or at least one processor.

According to an embodiment of the disclosure, the memory may store basic programs, application programs, and data, such as configuration information, for operations of the AF. In particular, the memory provides the stored data at the request of the processor 2010. The memory may include storage media such as a ROM, a RAM, a hard disk, a CD-ROM, and a DVD, or a combination of storage media. In addition, the memory may include multiple memories. Furthermore, the processor 2010 may perform the above-described embodiments of the disclosure, based on the programs for performing the embodiments, stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

According to an embodiment of the disclosure, a method performed by a network exposure function (NEF) in a wireless communication system may include an operation of receiving a synchronization service start request message from an application function (AF) entity, an operation of, in case that the synchronization service start request is received, determining whether there is a configuration between the NEF entity and a time sensitive communication time synchronization function (TSCTSF) entity, an operation of, in case that there is the configuration between the NEF entity and the TSCTSF entity, selecting a TSCTSF entity, based on the configuration, and an operation of transmitting, to the selected TSCTSF entity, a message requesting an update of a quality of service (QoS) for the synchronization service.

According to an embodiment of the disclosure, a method performed by a network exposure function (NEF) in a wireless communication system may include an operation of receiving a synchronization service stop request message from an application function (AF) entity, an operation of, in case that the synchronization service stop request is received, determining whether there is a configuration between the NEF entity and a policy control function (PCF) entity, an operation of, in case that there is the configuration between the NEF entity and the PCF entity, selecting a PCF entity, based on the configuration, and an operation of transmitting, to the selected TSCTSF entity, a message requesting an update of a quality of service (QoS).

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a network exposure function (NEF) entity in a wireless communication system, the method comprising:
receiving, from an application function (AF) entity, a session update request message including at least one quality of service (QoS) parameter;
determining whether a session is established between the NEF entity and a time sensitive communication time synchronization function (TSCTSF) entity; and
in case that a session is established between the NEF entity and the TSCTSF entity, transmitting, to the TSCTSF entity, a QoS update request message including the at least QoS parameter.

2. The method of claim 1, comprising:
in case that a session is not established between the NEF entity and the TSCTSF entity,
determining whether the QoS update request message includes at least one additional parameter related to TSCTSF; and
in case that the QoS update request message includes the at least one additional parameter related to the TSCTSF, rejecting the QoS update request message.

3. The method of claim 2, wherein the at least one additional parameter related to the TSCTSF includes at least one of a flow direction, a Burst Size, a Burst Arrival Time at UE (uplink) or UPF (downlink), a Periodicity, a Time domain, a Survival Time.

4. The method of claim 1, wherein the at least one QoS parameter includes at least one of a Requested 5GS Delay, a Requested Priority, and a Requested Guaranteed Bitrate.

5. The method of claim 2, wherein the at least one QoS parameter is included in the QoS update request message and transmitted to a policy control function (PCF) entity.

6. The method of claim 1, wherein the QoS update request message is related to a synchronization service.

7. The method of claim 1, comprising:
receiving, from the AF entity, a synchronization service stop request message;
on receiving the synchronization service stop request message, determining whether there is a configuration between the NEF entity and a policy control function (PCF) entity;
in case that a configuration between the NEF entity and the PCF entity exists, selecting a PCF entity, based on the configuration; and
transmitting, to the selected TSCTSF entity, a message requesting an update of a quality of service (QoS).

8. A network exposure function (NEF) entity in a wireless communication system, the NEF entity comprising:
a transceiver; and
at least one processor,
wherein the at least one processor is configured to:
receive, from an application function (AF) entity, a session update request message including at least one quality of service (QoS) parameter;
determine whether a session is established between the NEF entity and a time sensitive communication time synchronization function (TSCTSF) entity; and
in case that a session is established between the NEF entity and the TSCTSF entity, transmitting, to the TSCTSF entity, a QoS update request message including the at least QoS parameter.

9. The NEF entity of claim 8, wherein the at least one processor is configured to:
in case that a session is not established between the NEF entity and the TSCTSF entity, determine whether the QoS update request message includes at least one additional parameter related to TSCTSF; and
in case that the QoS update request message includes the at least one additional parameter related to the TSCTSF, reject the QoS update request message.

10. The NEF entity of claim 9, wherein the at least one additional parameter related to the TSCTSF includes at least one of a flow direction, a Burst Size, a Burst Arrival Time at UE (uplink) or UPF (downlink), a Periodicity, a Time domain, a Survival Time.

11. The NEF entity of claim 8, wherein the at least one QoS parameter includes at least one of a Requested 5GS Delay, a Requested Priority, and a Requested Guaranteed Bitrate.

12. The NEF entity of claim 9, wherein the at least one QoS parameter is included in the QoS update request message and transmitted to a policy control function (PCF) entity.

13. The NEF entity of claim 8, wherein the QoS update request message is related to a synchronization service.

14. The NEF entity of claim 9, wherein the at least one processor is configured to:
receive, from the AF entity, a synchronization service stop request message;
on receiving the synchronization service stop request message, determine whether there is a configuration between the NEF entity and a policy control function (PCF) entity;
in case that a configuration between the NEF entity and the PCF entity, select a PCF entity exists, based on the configuration; and
transmit, to the selected TSCTSF entity, a message requesting an update of a quality of service (QoS).
